# FASCICULE DE BREVET EUROPEEN

(11) **EP 4 295 008 B1**
(45) Date de publication et mention de la délivrance du brevet: **26.03.2025**
(21) Numéro de dépôt: 22706840.0
(22) Date de dépôt: 21.02.2022
(51) Int. Cl.: E06B 9/68, E06B 9/72, H02K 11/33, H02K 15/14, H02K 5/22, H02K 7/14, H02K 11/01, H02K 11/40

(54) **ACTIONNEUR ÉLECTROMÉCANIQUE, DISPOSITIF D'ENTRAÎNEMENT MOTORISÉ COMPRENANT UN TEL ACTIONNEUR ÉLECTROMÉCANIQUE ET DISPOSITIF D'OCCULTATION COMPRENANT UN TEL DISPOSITIF D'ENTRAÎNEMENT MOTORISÉ**
ELEKTROMECHANISCHER AKTUATOR, MOTORISIERTE ANTRIEBSVORRICHTUNG MIT SOLCH EINEM ELEKTROMECHANISCHEN AKTUATOR UND ABDECKVORRICHTUNG MIT SOLCH EINER MOTORISIERTEN ANTRIEBSVORRICHTUNG
ELECTROMECHANICAL ACTUATOR, MOTORIZED DRIVE DEVICE COMPRISING SUCH AN ELECTROMECHANICAL ACTUATOR AND COVERING DEVICE COMPRISING SUCH A MOTORIZED DRIVE DEVICE

(30) Priorité: 22.02.2021 FR 2101691
(43) Date de publication de la demande: 27.12.2023
(73) Titulaire: Somfy Activites SA, 74300 Cluses (FR)
(72) Inventeur: ROBERT, Héléna, 74300 Cluses (FR); SCHUEHMACHER, Cyril, 74300 Cluses (FR); RAMOS, Joël, 74300 Cluses (FR)
(74) Mandataire: Lavoix
(86) Numéro de dépôt international: PCT/EP2022/054230
(87) Numéro de publication internationale: WO 2022/175518

(56) Documents cités:
- FR-A1- 2 769 765
- FR-A1- 3 072 116
- US-A1- 2017 310 351

## Description

La présente invention concerne un actionneur électromécanique pour un dispositif d'occultation, autrement dit un actionneur électromécanique d'un dispositif d'occultation. La présente invention concerne également un dispositif d'entraînement motorisé pour un dispositif d'occultation, autrement dit un dispositif d'entraînement motorisé d'un dispositif d'occultation. La présente invention concerne enfin un dispositif d'occultation comprenant un écran entraîné en déplacement par un tel dispositif d'entraînement motorisé.

De manière générale, la présente invention concerne le domaine des dispositifs d'occultation comprenant un dispositif d'entraînement motorisé mettant en mouvement un écran, entre au moins une première position et au moins une deuxième position.

Un dispositif d'entraînement motorisé comprend un actionneur électromécanique d'un élément mobile de fermeture, d'occultation ou de protection solaire, tel qu'un volet, une porte, une grille, un store ou tout autre matériel équivalent, appelé par la suite écran.

On connaît déjà des actionneurs électromécaniques pour un dispositif d'occultation comprenant un carter, un support de couple, une couronne, un câble d'alimentation électrique et un moteur électrique. Le support de couple est disposé au niveau d'une première extrémité du carter. La couronne est insérée au moins en partie autour du support de couple. La couronne forme un palier de guidage en rotation d'un tube d'enroulement d'un dispositif d'entraînement motorisé du dispositif d'occultation, autour du carter de l'actionneur électromécanique. Le câble d'alimentation électrique est configuré pour être relié à un réseau d'alimentation en énergie électrique. Le moteur électrique est monté à l'intérieur du carter. Le moteur électrique est alimenté en énergie électrique par l'intermédiaire du câble d'alimentation électrique.

Dans un dispositif d'occultation, des charges électrostatiques sont générées par le frottement d'un écran, en particulier d'une toile, sur une partie en matière plastique ou métallique, en particulier le tube d'enroulement de l'écran ou un support de maintien du tube d'enroulement.

On connaît également le document EP 3 741 955 A1 qui décrit un actionneur électromécanique associé à un dispositif de décharge de charges électrostatiques d'un dispositif d'entraînement motorisé pour un dispositif d'occultation. Le dispositif de décharge de charges électrostatiques comprend un élément de conduction électrique. L'élément de conduction électrique est configuré pour être en contact électrique avec un tube d'enroulement.

Cependant, ce dispositif d'entraînement motorisé présente l'inconvénient que l'élément de conduction électrique relie électriquement un carter de l'actionneur électromécanique au tube d'enroulement et que le carter de l'actionneur électromécanique est relié à une ligne de terre, formée par un conducteur de terre du câble d'alimentation électrique de l'actionneur électromécanique.

Par conséquent, l'élément de conduction électrique crée un chemin de conduction électrique entre le tube d'enroulement et le carter de l'actionneur électromécanique, réalisé en métal.

En outre, l'élément de conduction électrique est fixé au tube d'enroulement et est en contact électrique coulissant avec le carter de l'actionneur électromécanique.

Par ailleurs, l'élément de conduction électrique, disposé entre le tube d'enroulement et le carter de l'actionneur électromécanique, est un accessoire, devant être monté par un installateur autour du carter de l'actionneur électromécanique, lors d'une installation du dispositif d'entraînement motorisé dans le dispositif d'occultation.

D'une part, un tel accessoire, risque d'être oublié lors de l'installation du dispositif d'entraînement motorisé dans le dispositif d'occultation. D'autre part, cet accessoire engendre une augmentation du coût d'obtention du dispositif d'entraînement motorisé et du temps d'assemblage de celui-ci.

En outre, avec un tel dispositif de décharge de charges électrostatiques, une surface externe du carter de l'actionneur électromécanique doit être dépourvue d'un revêtement de protection, telle qu'une peinture, alors que cela est généralement le cas pour éviter une corrosion du carter de l'actionneur électromécanique.

Par conséquent, avec un tel dispositif de décharge de charges électrostatiques, le carter de l'actionneur électromécanique n'est plus un composant standard pour un fabricant d'actionneurs électromécaniques destinés aux dispositifs d'occultation.

On connaît également le document FR 3 072 116 A1 qui décrit un actionneur électromécanique pour un dispositif d'occultation comprenant un carter, un support de couple, une couronne, un câble d'alimentation électrique, un moteur électrique, une unité électronique de contrôle et un dispositif de décharge de charges électrostatiques. Le support de couple est disposé au niveau d'une première extrémité du carter. La couronne est insérée au moins en partie autour du support de couple. La couronne forme un palier de guidage en rotation d'un tube d'enroulement d'un dispositif d'entraînement motorisé du dispositif d'occultation, autour du carter de l'actionneur électromécanique. Le câble d'alimentation électrique est configuré pour être relié à un réseau d'alimentation en énergie électrique. Le moteur électrique est monté à l'intérieur du carter. Le moteur électrique est alimenté en énergie électrique par l'intermédiaire du câble d'alimentation électrique. Le dispositif de décharge de charges électrostatiques est réalisé au moyen d'un éclateur ménagé au niveau d'une plaquette de circuit imprimé de l'unité électronique de contrôle. L'éclateur comprend une première et une deuxième électrodes formées respectivement par une première piste conductrice et par une deuxième piste conductrice de la plaquette de circuit imprimé. La première électrode est reliée électriquement au carter. En outre, la deuxième électrode est reliée électriquement à un des conducteurs électriques d'alimentation en énergie électrique du moteur électrique.

La présente invention a pour but de résoudre les inconvénients précités et de proposer un actionneur électromécanique pour un dispositif d'occultation, un dispositif d'entraînement motorisé pour un dispositif d'occultation, ainsi qu'un dispositif d'occultation comprenant un écran entraîné en déplacement par un tel dispositif d'entraînement motorisé, permettant de décharger des charges électrostatiques à l'extérieur de l'actionneur électromécanique, en particulier sans endommager de composants électroniques d'une unité électronique de contrôle de l'actionneur électromécanique, de sorte à garantir la fiabilité de fonctionnement de cet actionneur électromécanique.

A cet égard, la présente invention vise, selon un premier aspect, un actionneur électromécanique pour un dispositif d'occultation,
l'actionneur électromécanique comprenant au moins :
- un carter,
- un support de couple, le support de couple étant disposé au niveau d'une première extrémité du carter,
- une couronne, la couronne étant insérée au moins en partie autour du support de couple, la couronne formant un palier de guidage en rotation d'un tube d'enroulement d'un dispositif d'entraînement motorisé du dispositif d'occultation, autour du carter de l'actionneur électromécanique,
- un câble d'alimentation électrique, le câble d'alimentation électrique étant configuré pour être relié à un réseau d'alimentation en énergie électrique, le câble d'alimentation électrique comprenant soit au moins un blindage soit au moins un conducteur électrique de terre,
- un moteur électrique, le moteur électrique étant monté à l'intérieur du carter, le moteur électrique étant alimenté en énergie électrique par l'intermédiaire du câble d'alimentation électrique, et
- un dispositif de décharge de charges électrostatiques, le dispositif de décharge de charges électrostatiques comprenant au moins un élément de conduction électrique, l'élément de conduction électrique étant configuré pour être en contact électrique avec le tube d'enroulement.

Selon l'invention, la couronne porte l'élément de conduction électrique du dispositif de décharge de charges électrostatiques. Le dispositif de décharge de charges électrostatiques comprend, en outre, au moins un élément de liaison électrique. Le support de couple reçoit au moins en partie l'élément de liaison électrique. L'élément de conduction électrique, disposé au niveau de la couronne, est configuré pour être en contact électrique avec l'élément de liaison électrique, disposé au moins en partie au niveau du support de couple. En outre, l'élément de liaison électrique relie électriquement l'élément de conduction électrique au blindage du câble d'alimentation électrique ou au conducteur électrique de terre du câble d'alimentation électrique.

Ainsi, l'évacuation de charges électrostatiques au travers du dispositif de décharge de charges électrostatiques permet de créer un chemin préférentiel de décharge à partir du tube d'enroulement, vers l'élément de conduction électrique, disposé au niveau de la couronne, vers l'élément de liaison électrique, disposé au moins en partie au niveau du support de couple, puis vers le blindage du câble d'alimentation électrique ou le conducteur électrique de terre du câble d'alimentation électrique.

De cette manière, l'évacuation de charges électrostatiques au travers de l'élément de conduction électrique, disposé au niveau de la couronne, et de l'élément de liaison électrique, disposé à l'intérieur de l'actionneur électromécanique, en particulier du support de couple et, éventuellement, du carter, permet d'éviter des dysfonctionnements et/ou des endommagements de l'actionneur électromécanique et, en particulier, d'empêcher la destruction de composants électroniques montés sur une ou plusieurs plaques de circuit imprimé d'une unité électronique de contrôle.

Par conséquent, l'élément de conduction électrique et l'élément de liaison électrique permettent d'évacuer des charges électrostatiques accumulées dans un écran du dispositif d'occultation.

En outre, l'évacuation de charges électrostatiques au travers du dispositif de décharge de charges électrostatiques est mise en oeuvre de manière continue.

De cette manière, suite à une accumulation de charges électrostatiques due, notamment, au frottement d'un écran du dispositif d'occultation sur un ou plusieurs éléments d'assemblage du dispositif de d'occultation, l'actionneur électromécanique ne subit pas une décharge de charges électrostatiques via un arc électrique.

Selon une caractéristique avantageuse de l'invention, l'élément de conduction électrique, disposé au niveau de la couronne, est mobile en rotation par rapport à l'élément de liaison électrique, disposé au moins en partie au niveau du support de couple.

Selon une autre caractéristique avantageuse de l'invention, l'élément de conduction électrique, disposé au niveau de la couronne, est en contact électrique permanent avec l'élément de liaison électrique, disposé au moins en partie au niveau du support de couple, lors de l'entraînement en rotation de la couronne autour du support de couple.

En variante, l'élément de conduction électrique, disposé au niveau de la couronne, est en contact électrique périodiquement avec l'élément de liaison électrique, disposé au moins en partie au niveau du support de couple, lors de l'entraînement en rotation de la couronne autour du support de couple.

Selon une autre caractéristique avantageuse de l'invention, l'actionneur électromécanique comprend, en outre, une unité électronique de contrôle. L'unité électronique de contrôle comprend au moins une plaque de circuit imprimé, un premier élément de connexion électrique et un deuxième élément de connexion électrique. Le premier élément de connexion électrique est monté sur la plaque de circuit imprimé. Le deuxième élément de connexion électrique est relié électriquement au premier élément de connexion électrique. L'élément de liaison électrique est relié électriquement au premier élément de connexion électrique. En outre, le deuxième élément de connexion électrique est relié électriquement au blindage du câble d'alimentation électrique ou au conducteur électrique de terre du câble d'alimentation électrique.

Selon une autre caractéristique avantageuse de l'invention, l'élément de liaison électrique s'étend à partir de l'élément de conduction électrique, disposé au niveau de la couronne, jusqu'au premier élément de connexion électrique de l'unité électronique de contrôle.

Selon une autre caractéristique avantageuse de l'invention, l'élément de conduction électrique comprend un corps et au moins une languette de contact. En outre, la ou chaque languette de contact est reliée au corps.

La présente invention vise, selon un deuxième aspect, un dispositif d'entraînement motorisé pour un dispositif d'occultation,
le dispositif d'entraînement motorisé comprenant au moins :
- un actionneur électromécanique,
- un tube d'enroulement, le tube d'enroulement étant agencé de sorte à être entraîné en rotation par l'actionneur électromécanique.

Selon l'invention, l'actionneur électromécanique est conforme à l'invention et tel que mentionné ci-dessus.

Ce dispositif d'entraînement motorisé présente des caractéristiques et avantages analogues à ceux décrits précédemment, en relation avec l'actionneur électromécanique selon l'invention.

Selon une caractéristique avantageuse de l'invention, l'élément de conduction électrique, disposé au niveau de la couronne, est configuré pour être en contact électrique avec une face interne du tube d'enroulement.

La présente invention vise, selon un troisième aspect, un dispositif d'occultation,
le dispositif d'occultation comprenant au moins :
- un écran, et
- un dispositif d'entraînement motorisé, l'écran étant enroulable sur un tube d'enroulement du dispositif d'entraînement motorisé.

Selon l'invention, le dispositif d'entraînement motorisé est conforme à l'invention et tel que mentionné ci-dessus.

Ce dispositif d'occultation présente des caractéristiques et avantages analogues à ceux décrits précédemment, en relation avec l'actionneur électromécanique et le dispositif d'entraînement motorisé selon l'invention.

D'autres particularités et avantages de l'invention apparaîtront encore dans la description ci-après, faite en référence aux dessins annexés, donnés à titre d'exemples non limitatifs et dans lesquels :
[Fig 1] la figure 1 est une vue schématique en coupe transversale d'une installation d'occultation conforme à un premier mode de réalisation de l'invention ;
[Fig 2] la figure 2 est une vue schématique en perspective de l'installation illustrée à la figure 1 ;
[Fig 3] la figure 3 est une vue schématique en perspective d'un dispositif d'entraînement motorisé de l'installation illustrée aux figures 1 et 2, ce dispositif d'entraînement motorisé comprenant un actionneur électromécanique conforme à l'invention et un tube d'enroulement ;
[Fig 4] la figure 4 est une vue en coupe schématique du dispositif d'entraînement motorisé illustré à la figure 3, selon un plan de coupe passant par un axe de rotation d'un arbre de sortie de l'actionneur électromécanique ;
[Fig 5] la figure 5 est une première vue en coupe schématique, de détail et à plus grande échelle, d'une partie du dispositif d'entraînement motorisé illustré aux figures 3 et 4, selon un plan de coupe décalé par rapport à l'axe de rotation de l'arbre de sortie de l'actionneur électromécanique ;
[Fig 6] la figure 6 est une deuxième vue en coupe schématique, de détail et à encore plus grande échelle, du dispositif d'entraînement motorisé illustré aux figures 3 à 5, selon un plan de coupe orthogonal à l'axe de rotation de l'arbre de sortie de l'actionneur électromécanique, le plan de coupe de la figure 6 étant repéré par la ligne V-V à la figure 5 ;
[Fig 7] la figure 7 est une vue schématique en perspective d'un élément de liaison électrique appartenant à l'actionneur électromécanique illustré aux figures 3 à 6 ;
[Fig 8] la figure 8 est une vue schématique en perspective d'un élément de conduction électrique appartenant à l'actionneur électromécanique illustré aux figures 3 à 6 ;
[Fig 9] la figure 9 est une vue schématique en coupe analogue à la figure 5 pour un actionneur électromécanique conforme à un deuxième mode de réalisation, selon une orientation différente du dispositif d'entraînement motorisé autour d'un axe de rotation X ;
[Fig 10] la figure 10 est une vue schématique en coupe analogue à la figure 6 pour l'actionneur électromécanique conforme au deuxième mode de réalisation, le plan de coupe de la figure 10 étant repéré par la ligne IX-IX à la figure 9 ; et
[Fig 11] la figure 11 est une vue analogue à la figure 7 pour l'actionneur électromécanique conforme au deuxième mode de réalisation.

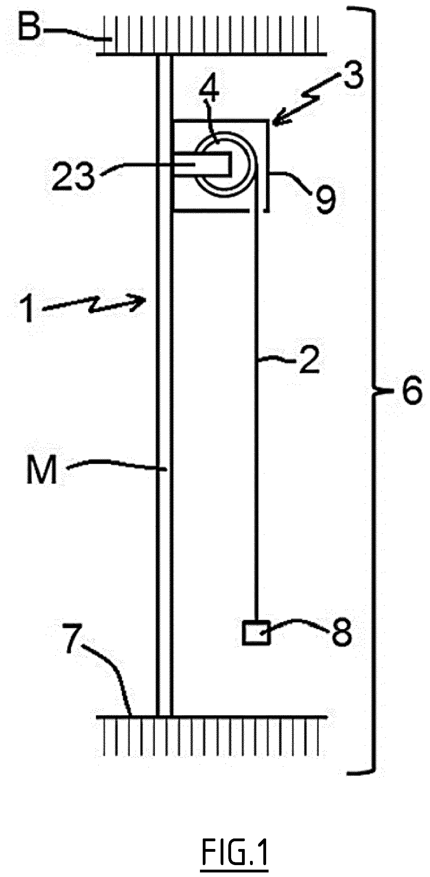

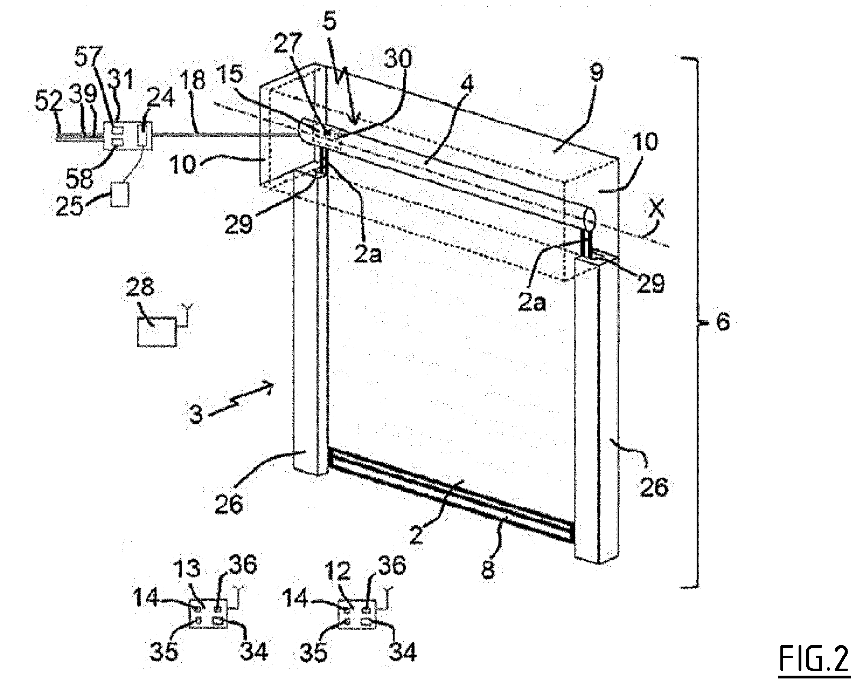

On décrit tout d'abord, en référence aux figures 1 et 2, une installation 6, comprenant un dispositif de fermeture, d'occultation ou de protection solaire 3, cette installation 6 étant conforme à un premier mode de réalisation de l'invention, installée dans un bâtiment B comportant une ouverture 1, dans laquelle est disposée une fenêtre ou une porte. Cette installation 6 est équipée d'un écran 2 appartenant au dispositif de fermeture, d'occultation ou de protection solaire 3, en particulier un store motorisé.

Le dispositif de fermeture, d'occultation ou de protection solaire 3 est par la suite appelé « dispositif d'occultation ». Le dispositif d'occultation 3 comprend l'écran 2.

Le dispositif d'occultation 3 peut être un store, notamment un store comprenant une toile enroulable, ou un volet roulant. La présente invention s'applique à tous les types de dispositif d'occultation.

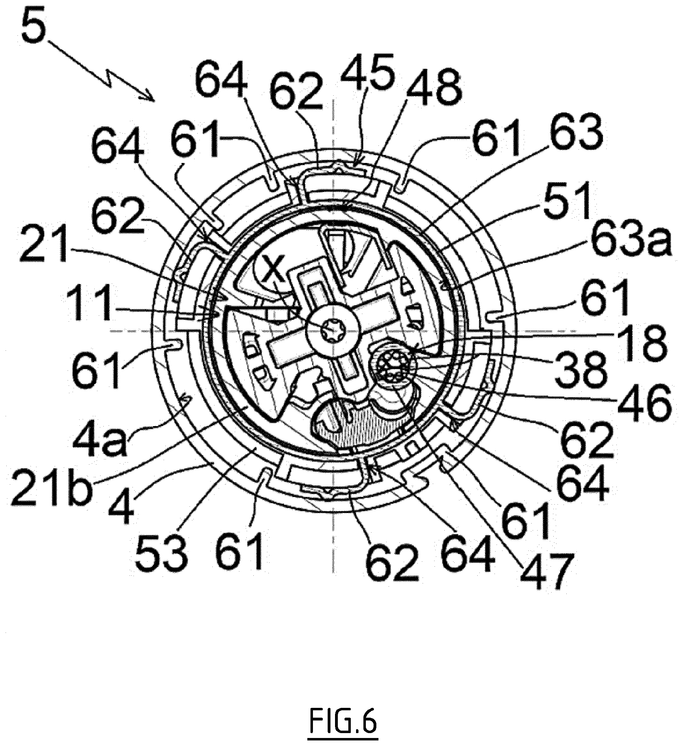

On décrit, en référence aux figures 1 à 6, un store enroulable conforme au premier mode de réalisation de l'invention.

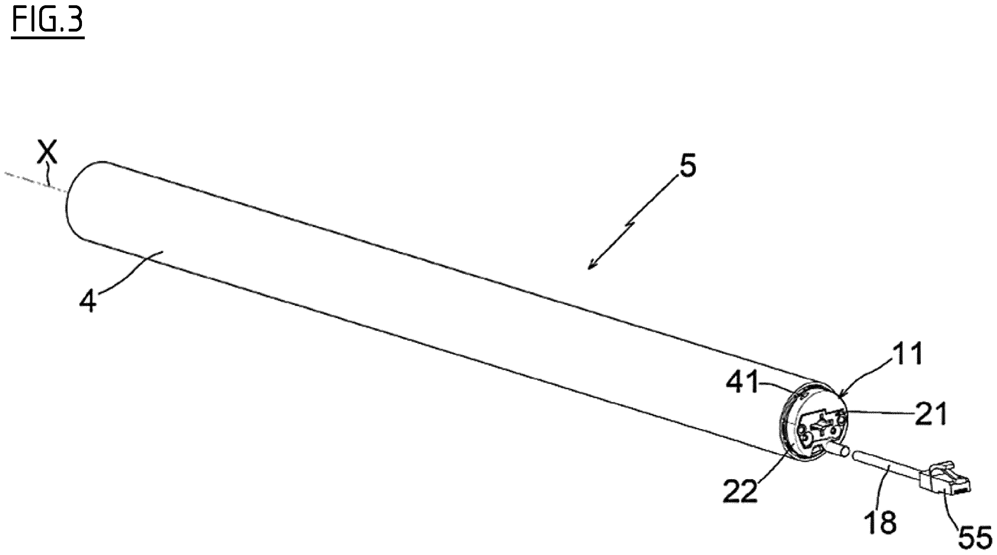

Le dispositif d'occultation 3 comprend un dispositif d'entraînement motorisé 5, conforme au premier mode de réalisation de l'invention. Le dispositif d'entraînement motorisé 5 comprend un actionneur électromécanique 11 illustré aux figures 3 à 6.

Le dispositif d'entraînement motorisé 5 et, par conséquent, le dispositif d'occultation 3 comprend, en outre, un tube d'enroulement 4. En outre, le tube d'enroulement 4 est agencé de sorte à être entraîné en rotation par l'actionneur électromécanique 11.

Ici, l'écran 2 est enroulable sur le tube d'enroulement 4.

Ainsi, l'écran 2 du dispositif d'occultation 3 est enroulé sur le tube d'enroulement 4 ou déroulé autour de celui-ci, le tube d'enroulement 4 étant entraîné par le dispositif d'entraînement motorisé 5, en particulier par l'actionneur électromécanique 11.

De cette manière, l'écran 2 est mobile entre une position enroulée, en particulier haute, et une position déroulée, en particulier basse, et inversement.

L'écran 2 du dispositif d'occultation 3 est un écran de fermeture, d'occultation et/ou de protection solaire, s'enroulant et se déroulant autour du tube d'enroulement 4, dont le diamètre intérieur est supérieur au diamètre externe de l'actionneur électromécanique 11, de sorte que l'actionneur électromécanique 11 peut être inséré dans le tube d'enroulement 4, lors de l'assemblage du dispositif d'occultation 3.

Avantageusement, le dispositif d'occultation 3 comprend un dispositif de maintien 9, 23.

Avantageusement, le dispositif de maintien 9, 23 peut comprendre deux supports 23. Un support 23 est disposé à chaque extrémité du tube d'enroulement 4, en particulier dans une configuration assemblée du dispositif d'occultation 3.

Ainsi, le tube d'enroulement 4 est maintenu par l'intermédiaire des supports 23. Un seul des supports 23 est visible à la figure 1 et ceux-ci ne sont pas représentés à la figure 2. Les supports 23 permettent de lier mécaniquement le dispositif d'occultation 3 à la structure du bâtiment B, notamment au mur M du bâtiment B.

Avantageusement, le dispositif de maintien 9, 23 peut comprendre un caisson 9. En outre, le tube d'enroulement 4 et au moins une partie de l'écran 2 sont logés à l'intérieur du caisson 9, en particulier dans la configuration assemblée du dispositif d'occultation 3.

De manière générale, le caisson 9 est disposé au-dessus de l'ouverture 1, ou encore en partie supérieure de l'ouverture 1.

Ici et comme illustré à la figure 1, les supports 23 sont également logés à l'intérieur du caisson 9.

Avantageusement, le caisson 9 comprend deux joues 10, telles qu'illustrées à la figure 2. Une joue 10 est disposée à chaque extrémité du caisson 9, en particulier dans la configuration assemblée du dispositif d'occultation 3.

En variante, représentée à la figure 2, le tube d'enroulement 4 est maintenu par l'intermédiaire du caisson 9, en particulier par l'intermédiaire des joues 10 du caisson 9, sans utiliser des supports, tels que les supports 23 mentionnés ci-dessus.

Avantageusement, le dispositif d'occultation 3 peut également comprendre deux coulisses latérales 26, comme illustré uniquement à la figure 2. Chaque coulisse latérale 26 comprend une gorge 29. Chaque gorge 29 de l'une des coulisses latérales 26 coopère, autrement dit est configurée pour coopérer, avec un bord latéral 2a de l'écran 2, en particulier dans la configuration assemblée du dispositif d'occultation 3, de sorte à guider l'écran 2, lors de l'enroulement et du déroulement de l'écran 2 autour du tube d'enroulement 4.

L'actionneur électromécanique 11 est, par exemple, de type tubulaire. Celui-ci permet de mettre en rotation le tube d'enroulement 4 autour d'un axe de rotation X, de sorte à déplacer, en particulier dérouler ou enrouler, l'écran 2 du dispositif d'occultation 3.

Dans un état monté du dispositif d'occultation 3, l'actionneur électromécanique 11 est inséré dans le tube d'enroulement 4.

Le dispositif d'occultation 3 comprend, en outre, une barre de charge 8 pour exercer une tension sur l'écran 2.

Le store enroulable, qui forme le dispositif d'occultation 3, comporte une toile, formant l'écran 2 du store enroulable 3. Une première extrémité de l'écran 2, en particulier l'extrémité supérieure de l'écran 2, dans la configuration assemblée du dispositif d'occultation 3, est fixée au tube d'enroulement 4. En outre, une deuxième extrémité de l'écran 2, en particulier l'extrémité inférieure de l'écran 2, dans la configuration assemblée du dispositif d'occultation 3, est fixée à la barre de charge 8.

Ici, la toile formant l'écran 2 est réalisée à partir d'un matériau textile.

Dans un exemple de réalisation, non représenté, la première extrémité de l'écran 2 présente un ourlet au travers duquel est disposée une tige, en particulier en matière plastique. Cet ourlet réalisé au niveau de la première extrémité de l'écran 2 est obtenu au moyen d'une couture de la toile formant l'écran 2. Lors de l'assemblage de l'écran 2 sur le tube d'enroulement 4, l'ourlet et la tige situés au niveau de la première extrémité de l'écran 2 sont insérés par coulissement dans une rainure ménagée sur la face externe du tube d'enroulement 4, en particulier sur toute la longueur du tube d'enroulement 4, de sorte à solidariser l'écran 2 avec le tube d'enroulement 4 et à pouvoir enrouler et dérouler l'écran 2 autour du tube d'enroulement 4.

Quel que soit le mode de réalisation, la première extrémité de l'écran 2 est disposée au niveau du dispositif de maintien 9, 23, en ce sens que cette première extrémité demeure au-dessus de l'ouverture 1 en configuration assemblée du dispositif d'occultation 3.

Dans le cas d'un store enroulable, la position haute enroulée correspond à une position de fin de course haute prédéterminée, ou encore à la mise en appui de la barre de charge 8 de l'écran 2 contre un bord du caisson 9 du store enroulable 3, et la position basse déroulée correspond à une position de fin de course basse prédéterminée, ou à la mise en appui de la barre de charge 8 de l'écran 2 contre un seuil 7 de l'ouverture 1, ou encore au déroulement complet de l'écran 2.

Avantageusement, le dispositif d'entraînement motorisé 5 est commandé par une unité de commande. L'unité de commande peut être, par exemple, une unité de commande locale 12 ou une unité de commande centrale 13.

Avantageusement, l'unité de commande locale 12 peut être reliée, en liaison filaire ou non filaire, avec l'unité de commande centrale 13.

Avantageusement, l'unité de commande centrale 13 peut piloter l'unité de commande locale 12, ainsi que d'autres unités de commande locales similaires et réparties dans le bâtiment B.

Le dispositif d'entraînement motorisé 5 est, de préférence, configuré pour exécuter les commandes de déroulement ou d'enroulement de l'écran 2 du dispositif d'occultation 3, pouvant être émises, notamment, par l'unité de commande locale 12 ou l'unité de commande centrale 13.

L'installation 6 comprend soit l'unité de commande locale 12, soit l'unité de commande centrale 13, soit l'unité de commande locale 12 et l'unité de commande centrale 13.

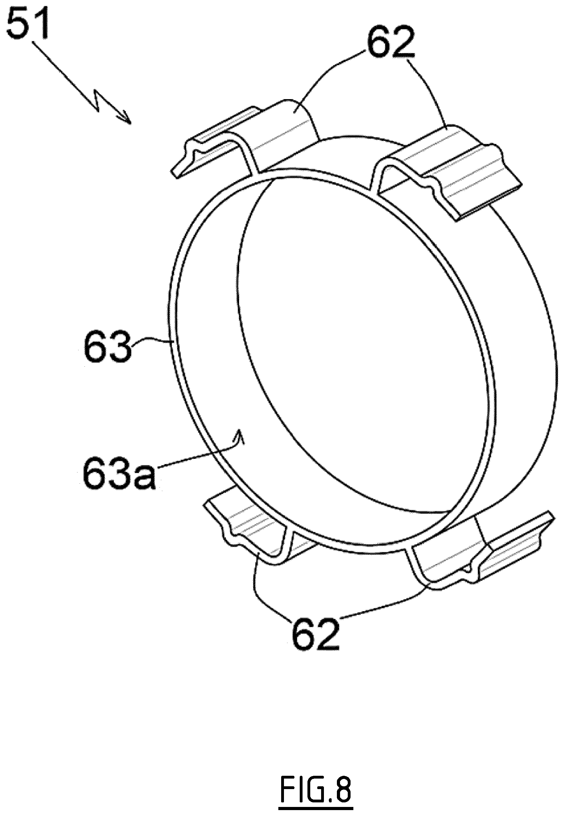

On décrit à présent, plus en détail et en référence aux figures 3 à 8, le dispositif d'entraînement motorisé 5, y compris l'actionneur électromécanique 11, appartenant à l'installation 6 et, plus particulièrement, au dispositif d'occultation 3 illustré aux figures 1 et 2.

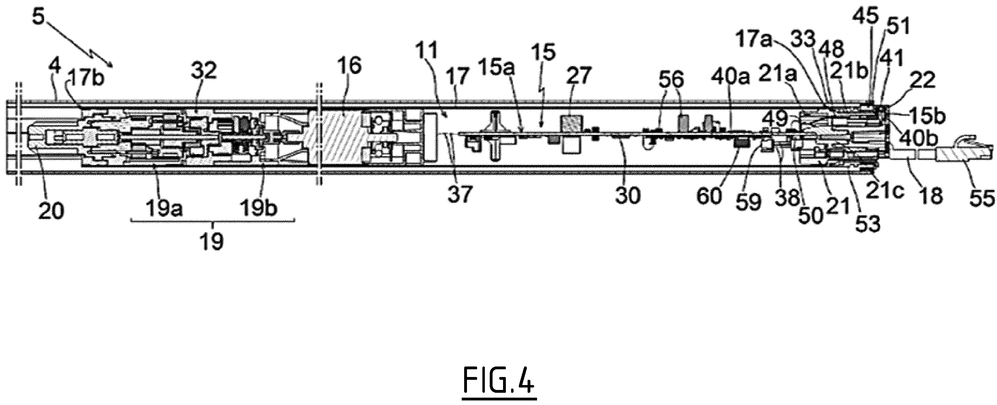

L'actionneur électromécanique 11 comprend un moteur électrique 16. Le moteur électrique 16 est représenté par son enveloppe à la figure 4, sans détails sur ses éléments constitutifs internes, qui sont connus en soi.

Ici, le moteur électrique 16 comprend un rotor et un stator, non représentés, positionnés de manière coaxiale autour de l'axe de rotation X du tube d'enroulement 4 en configuration montée du dispositif d'entraînement motorisé 5.

Des moyens de commande de l'actionneur électromécanique 11, permettant le déplacement de l'écran 2 du dispositif d'occultation 3, comprennent au moins une unité électronique de contrôle 15. Cette unité électronique de contrôle 15 est apte à mettre en fonctionnement le moteur électrique 16 de l'actionneur électromécanique 11, et, en particulier, permettre l'alimentation en énergie électrique du moteur électrique 16.

Ainsi, l'unité électronique de contrôle 15 commande, notamment, le moteur électrique 16, de sorte à ouvrir ou fermer l'écran 2, comme décrit précédemment.

Les moyens de commande de l'actionneur électromécanique 11 comprennent des moyens matériels et/ou logiciels.

A titre d'exemple nullement limitatif, les moyens matériels peuvent comprendre au moins un microcontrôleur 30.

Avantageusement, l'unité électronique de contrôle 15 comprend, en outre, un premier module de communication 27, en particulier de réception d'ordres de commande, les ordres de commande étant émis par un émetteur d'ordres, tel que l'unité de commande locale 12 ou l'unité de commande centrale 13, ces ordres étant destinés à commander le dispositif d'entraînement motorisé 5.

Avantageusement, le premier module de communication 27 de l'unité électronique de contrôle 15 est de type sans fil. En particulier, le premier module de communication 27 est configuré pour recevoir des ordres de commande radioélectriques.

Avantageusement, le premier module de communication 27 peut également permettre la réception d'ordres de commande transmis par des moyens filaires.

Avantageusement, l'unité électronique de contrôle 15, l'unité de commande locale 12 et/ou l'unité de commande centrale 13 peuvent être en communication avec une station météorologique disposée à l'intérieur du bâtiment B ou déportée à l'extérieur du bâtiment B, incluant, notamment, un ou plusieurs capteurs pouvant être configurés pour déterminer, par exemple, une température, une luminosité, ou encore une vitesse de vent, dans le cas où la station météorologique est déportée à l'extérieur du bâtiment B.

Avantageusement, l'unité électronique de contrôle 15, l'unité de commande locale 12 et/ou l'unité de commande centrale 13 peuvent également être en communication avec un serveur 28, tel qu'illustré à la figure 2, de sorte à contrôler l'actionneur électromécanique 11 suivant des données mises à disposition à distance par l'intermédiaire d'un réseau de communication, en particulier un réseau internet pouvant être relié au serveur 28.

L'unité électronique de contrôle 15 peut être commandée à partir de l'unité de commande locale 12 et/ou centrale 13. L'unité de commande locale 12 et/ou centrale 13 est pourvue d'un clavier de commande. Le clavier de commande de l'unité de commande locale 12 ou centrale 13 comprend un ou plusieurs éléments de sélection 14 et, éventuellement, un ou plusieurs éléments d'affichage 34.

A titre d'exemples nullement limitatifs, les éléments de sélection peuvent comprendre des boutons poussoirs et/ou des touches sensitives. Les éléments d'affichage peuvent comprendre des diodes électroluminescentes et/ou un afficheur LCD (acronyme du terme anglo-saxon « Liquid Crystal Display ») ou TFT (acronyme du terme anglo-saxon « Thin Film Transistor »). Les éléments de sélection et d'affichage peuvent être également réalisés au moyen d'un écran tactile.

Avantageusement, l'unité de commande locale 12 et/ou centrale 13 comprend au moins un deuxième module de communication 36.

Ainsi, le deuxième module de communication 36 de l'unité de commande locale 12 ou centrale 13 est configuré pour émettre, autrement dit émet, des ordres de commande, en particulier par des moyens sans fil, par exemple radioélectriques, ou par des moyens filaires.

En outre, le deuxième module de communication 36 de l'unité de commande locale 12 ou centrale 13 peut également être configuré pour recevoir, autrement dit reçoit, des ordres de commande, en particulier par l'intermédiaire des mêmes moyens.

Avantageusement, le deuxième module de communication 36 de l'unité de commande locale 12 ou centrale 13 est configuré pour communiquer, autrement dit communique, avec le premier module de communication 27 de l'unité électronique de contrôle 15.

Ainsi, le deuxième module de communication 36 de l'unité de commande locale 12 ou centrale 13 échange des ordres de commande avec le premier module de communication 27 de l'unité électronique de contrôle 15, soit de manière monodirectionnelle, soit de manière bidirectionnelle.

Avantageusement, l'unité de commande locale 12 est un point de commande, pouvant être fixe ou nomade. Un point de commande fixe peut être un boîtier de commande destiné à être fixé sur une façade du mur M du bâtiment B ou sur une face d'un cadre dormant d'une fenêtre ou d'une porte. Un point de commande nomade peut être une télécommande, un téléphone intelligent ou une tablette.

Avantageusement, l'unité de commande locale 12 et/ou centrale 13 comprend, en outre, un contrôleur 35.

Le dispositif d'entraînement motorisé 5, en particulier l'unité électronique de contrôle 15, est, de préférence, configuré pour exécuter des ordres de commande de déplacement, notamment de fermeture ainsi que d'ouverture, de l'écran 2 du dispositif d'occultation 3. Ces ordres de commande peuvent être émis, notamment, par l'unité de commande locale 12 ou par l'unité de commande centrale 13.

Le dispositif d'entraînement motorisé 5 peut être contrôlé par l'utilisateur, par exemple par la réception d'un ordre de commande correspondant à un appui sur le ou l'un des éléments de sélection 14 de l'unité de commande locale 12 ou centrale 13.

Le dispositif d'entraînement motorisé 5 peut également être contrôlé automatiquement, par exemple par la réception d'un ordre de commande correspondant à au moins un signal provenant d'au moins un capteur, non représenté, et/ou à un signal provenant d'une horloge, non représentée, de l'unité électronique de contrôle 15, en particulier du microcontrôleur 30. Le capteur et/ou l'horloge peuvent être intégrés à l'unité de commande locale 12 ou à l'unité de commande centrale 13.

L'actionneur électromécanique 11 comprend un carter 17, en particulier tubulaire. Le moteur électrique 16 est monté à l'intérieur du carter 17, en particulier dans une configuration assemblée de l'actionneur électromécanique 11.

Ici, le carter 17 de l'actionneur électromécanique 11 est de forme cylindrique, notamment de révolution autour de l'axe de rotation X.

Dans un exemple de réalisation, le carter 17 est réalisé dans un matériau métallique.

La matière du carter de l'actionneur électromécanique n'est pas limitative et peut être différente. Il peut s'agir, en particulier, d'une matière plastique.

Avantageusement, le dispositif d'entraînement motorisé 5 et, par conséquent, le dispositif d'occultation 3 comprend, en outre, un dispositif d'alimentation en énergie électrique 31.

Ici, l'actionneur électromécanique 11 est configuré pour être relié électriquement, autrement dit est relié électriquement, au dispositif d'alimentation en énergie électrique 31.

Avantageusement, l'actionneur électromécanique 11 comprend, en outre, des premiers conducteurs électriques 37.

Ici, les premiers conducteurs électriques 37 s'étendent entre l'unité électronique de contrôle 15 et le moteur électrique 16, comme illustré en partie centrale de la figure 4.

L'actionneur électromécanique 11 comprend, en outre, un câble d'alimentation électrique 18.

Avantageusement, le câble d'alimentation électrique 18 comprend au moins des deuxièmes conducteurs électriques 38.

Ici, les deuxièmes conducteurs électriques 38 sont visibles aux figures 4 à 6, au niveau d'une extrémité du câble d'alimentation électrique 18.

Les premiers conducteurs électriques 37 sont configurés pour être reliés à un réseau d'alimentation en énergie électrique 52, au moyen des deuxièmes conducteurs électriques 38.

Le moteur électrique 16 est alimenté en énergie électrique par l'intermédiaire des premiers conducteurs électriques 37, eux-mêmes reliés électriquement aux deuxièmes conducteurs électriques 38.

Ainsi, le moteur électrique 16 est configuré pour être alimenté en énergie électrique, autrement dit est alimenté en énergie électrique, par le réseau d'alimentation en énergie électrique 52, au travers du câble d'alimentation électrique 18.

De cette manière, les premiers conducteurs électriques 37 de l'actionneur électromécanique 11 sont configurés pour être reliés électriquement, autrement dit sont reliés électriquement, aux deuxièmes conducteurs électriques 38 du câble d'alimentation électrique 18. En outre, les deuxièmes conducteurs électriques 38 du câble d'alimentation électrique 18 sont configurés pour être reliés électriquement, autrement dit sont reliés électriquement, à des troisièmes conducteurs électriques 39 du réseau d'alimentation en énergie électrique 52, par exemple au moyen de connecteurs électriques, tel que le premier connecteur électrique 55 du câble d'alimentation électrique 18 illustré aux figures 3 et 4.

Ici, l'actionneur électromécanique 11 comprend, en outre, l'unité électronique de contrôle 15.

Avantageusement, l'unité électronique de contrôle 15 comprend une première carte électronique 15a et une deuxième carte électronique 15b.

Avantageusement, l'unité électronique de contrôle 15 et, plus particulièrement, chacune des première et deuxième cartes électroniques 15a, 15b comprend au moins une plaque de circuit imprimé 40a, 40b.

Avantageusement, la ou chaque plaque de circuit imprimée 40a, 40b est équipée de composants électroniques 56.

Les deuxièmes conducteurs électriques 38 sont configurés pour relier électriquement, autrement dit relient électriquement, le câble d'alimentation électrique 18 à l'unité électronique de contrôle 15, en particulier aux première et deuxième cartes électroniques 15a, 15b et, plus particulièrement, à la plaque de circuit imprimé 40a, 40b de chacune de ces première et deuxième cartes électroniques 15a, 15b.

Les premiers conducteurs électriques 37 sont réalisés au moyen de fils électriques et/ou de pistes électriques de la ou chaque plaque de circuit imprimé 40a, 40b de l'unité électronique de contrôle 15. Seule la partie des premiers conducteurs électriques 37 réalisée au moyen de fils électriques est visible à la figure 4.

Ici, le câble d'alimentation électrique 18, en particulier les deuxièmes conducteurs électriques 38, sont reliés électriquement, autrement dit sont configurés pour être reliés électriquement, à des pistes électriques, non représentées, de la première plaque de circuit imprimé 40a au moyen d'un deuxième connecteur électrique 59 du câble d'alimentation électrique 18 et d'un connecteur électrique 60 de la première carte électronique 15a, comme illustré à la figure 4.

Ici, la tension du réseau d'alimentation en énergie électrique 52 est, préférentiellement, continue et dite « très basse tension ». La valeur de la tension du réseau d'alimentation en énergie électrique 52 est, préférentiellement, inférieure ou égale à 120 volts et, plus particulièrement, inférieure ou égale à 50 volts. La valeur de la tension du réseau d'alimentation en énergie électrique 52 peut être, par exemple, de l'ordre de 12 volts, 24 volts ou 48 volts.

A titre d'exemple nullement limitatif, le réseau d'alimentation en énergie électrique 52 peut être un réseau dit « PoE » (acronyme du terme anglo-saxon Power over Ethernet).

Ici, le moteur électrique 16 peut être de type sans balais à commutation électronique, appelé également « BLDC » (acronyme du terme anglo-saxon BrushLess Direct Current) ou « synchrone à aimants permanents », ou de type à courant continu.

Avantageusement, le dispositif d'alimentation en énergie électrique 31 peut comprendre au moins une batterie 24.

La batterie 24 peut être disposée au niveau du caisson 9 du dispositif d'occultation 3. La batterie 24 peut ainsi être disposée à l'intérieur ou à l'extérieur du caisson 9. La batterie 24 peut également être disposée à l'intérieur du tube d'enroulement 4, tout en étant à l'extérieur du carter 17. L'actionneur électromécanique 11 peut également comprendre la batterie 24. La batterie 24 peut ainsi être disposée à l'intérieur du carter 17, en particulier dans la configuration assemblée de l'actionneur électromécanique 11.

Avantageusement, le dispositif d'alimentation en énergie électrique 31 peut comprendre, en outre, au moins un concentrateur 57 et, éventuellement, au moins un adaptateur 58, en particulier dans le cas où l'actionneur électromécanique 11 est configuré pour être relié électriquement, autrement dit est relié électriquement, à un réseau d'alimentation en énergie électrique dit « PoE ».

Avantageusement, le câble d'alimentation électrique 18 est configuré pour alimenter en énergie électrique, autrement dit alimente en énergie électrique, l'actionneur électromécanique 11, notamment l'unité électronique de contrôle 15 et le moteur électrique 16, en particulier à partir du dispositif d'alimentation en énergie électrique 31, en particulier à partir de la batterie 24.

Avantageusement, la batterie 24 comprend un ou plusieurs éléments de stockage d'énergie. Les éléments de stockage d'énergie de la batterie 24 peuvent être, notamment, des accumulateurs rechargeables, dans le cas où la batterie 24 est de type rechargeable, ou encore des piles.

Avantageusement, le dispositif d'entraînement motorisé 5 et, en particulier, l'unité électronique de contrôle 15, comprend des éléments de chargement configurés pour charger la batterie 24 à partir de l'énergie électrique fournie par une source d'alimentation en énergie électrique externe 25, telle qu'illustrée à la figure 2.

Avantageusement, la source d'alimentation en énergie électrique externe 25 est un chargeur pouvant être branché sur une prise électrique murale, de sorte à recharger la batterie 24 à partir d'un réseau d'alimentation en énergie électrique du secteur.

Avantageusement, la première carte électronique 15a est configurée pour contrôler le moteur électrique 16. En outre, la deuxième carte électronique 15b est configurée pour, notamment, accéder à des fonctions de paramétrage et/ou de configuration de l'actionneur électromécanique 11, au moyen de dispositifs de sélection 41 et, éventuellement, d'affichage, non représentés. Par ailleurs, la deuxième carte électronique 15b peut être configurée pour permettre la recharge de la batterie 24.

Ici et de manière nullement limitative, les éléments de chargement sont disposés au niveau de la deuxième carte électronique 15b.

L'actionneur électromécanique 11 comprend, en outre, un arbre de sortie 20.

Avantageusement, l'actionneur électromécanique 11 comprend, en outre, un réducteur 19.

Le réducteur 19 comprend au moins un étage de réduction. L'étage de réduction peut être un train d'engrenages de type épicycloïdal.

Le type et le nombre d'étages de réduction du réducteur ne sont pas limitatifs.

Avantageusement, l'actionneur électromécanique 11 comprend, en outre, un frein 32.

A titre d'exemples nullement limitatifs, le frein 32 peut être un frein à ressort, un frein à came, un frein magnétique ou un frein électromagnétique.

Le frein 32 est configuré pour freiner et/ou pour bloquer en rotation l'arbre de sortie 20, de sorte à réguler la vitesse de rotation du tube d'enroulement 4, lors d'un déplacement de l'écran 2, et à maintenir bloqué le tube d'enroulement 4, lorsque l'actionneur électromécanique 11 est désactivé électriquement.

Ici et comme visible à la figure 4, le frein 32 est configuré pour être disposé, autrement dit est disposé, dans la configuration assemblée de l'actionneur électromécanique 11, entre deux étages de réduction 19a, 19b du réducteur 19.

En variante, non représentée, le frein 32 est configuré pour être disposé, autrement dit est disposé, dans la configuration assemblée de l'actionneur électromécanique 11, entre l'unité électronique de contrôle 15 et le moteur électrique 16, autrement dit à l'entrée du moteur électrique 16, ou entre le réducteur 19 et l'arbre de sortie 20, autrement dit à la sortie du réducteur 19, ou encore entre le moteur électrique 16 et le réducteur 19, c'est-à-dire à la sortie du moteur électrique 16.

Avantageusement, le réducteur 19 et, éventuellement, le frein 32 sont disposés à l'intérieur du carter 17 de l'actionneur électromécanique 11, en particulier dans la configuration assemblée de l'actionneur électromécanique 11.

Le tube d'enroulement 4 est entraîné en rotation autour de l'axe de rotation X et du carter 17 de l'actionneur électromécanique 11 en étant soutenu par l'intermédiaire de deux liaisons pivot.

La première liaison pivot est réalisée au niveau d'une première extrémité du tube d'enroulement 4 au moyen d'une couronne 53. La couronne 53 permet ainsi de réaliser un palier.

La couronne 53 forme, autrement dit est configurée pour former ou constituer, un palier de guidage en rotation du tube d'enroulement 4, autour du carter 17 de l'actionneur électromécanique 11, en particulier dans une configuration assemblée du dispositif d'entraînement motorisé 5 et, par conséquent, du dispositif d'occultation 3.

Ici, l'actionneur électromécanique 11 comprend la couronne 53.

Autrement dit, la couronne 53 fait partie intégrante de l'actionneur électromécanique 11, c'est-à-dire que la couronne 53 n'est pas un accessoire à ajouter dans le dispositif d'entraînement motorisé 5 pour permettre la première liaison pivot entre le tube d'enroulement 4 et l'actionneur électromécanique 11. La couronne 53 ne peut donc pas être oubliée lors de l'assemblage de l'actionneur électromécanique 11 avec le tube d'enroulement 4, comme cela pourrait être le cas avec un accessoire additionnel distinct de l'actionneur électromécanique 11, autrement dit ne faisant pas partie intégrante de ce dernier.

La deuxième liaison pivot, non représentée, est réalisée au niveau d'une deuxième extrémité du tube d'enroulement 4.

L'actionneur électromécanique 11 comprend, en outre, un support de couple 21, pouvant également être appelé « tête d'actionneur » ou « point fixe ».

Ici, le support de couple 21 est disposé au niveau d'une première extrémité 17a du carter 17 de l'actionneur électromécanique 11, en particulier dans la configuration assemblée de l'actionneur électromécanique 11.

Le support de couple 21 permet de reprendre les efforts exercés par l'actionneur électromécanique 11, en particulier le couple exercé par l'actionneur électromécanique 11, par rapport à la structure du bâtiment B. Le support de couple 21 permet avantageusement de reprendre, en outre, des efforts exercés par le tube d'enroulement 4, notamment le poids du tube d'enroulement 4, de l'actionneur électromécanique 11 et de l'écran 2, et d'assurer la reprise de ces efforts par la structure du bâtiment B.

Ainsi, le support de couple 21 de l'actionneur électromécanique 11 permet de fixer l'actionneur électromécanique 11 sur le dispositif de maintien 9, 23, en particulier à l'un des supports 23 ou à l'une des joues 10 du caisson 9.

Avantageusement, le support de couple 21 est en saillie au niveau de la première extrémité 17a du carter 17 de l'actionneur électromécanique 1.

Avantageusement, le support de couple 21 de l'actionneur électromécanique 11 peut également permettre d'obturer la première extrémité 17a du carter 17.

Par ailleurs, le support de couple 21 de l'actionneur électromécanique 11 peut permettre de supporter au moins une partie de l'unité électronique de contrôle 15.

Avantageusement, le support de couple 21 est fixé au carter 17 au moyen d'un ou plusieurs éléments de fixation, non représentés, en particulier dans la configuration assemblée de l'actionneur électromécanique 11. Le ou les éléments de fixation peuvent être, notamment, des bossages, des vis de fixation, des éléments de fixation par encliquetage élastique, des rainures emmanchées dans des échancrures ou une combinaison de ces différents éléments de fixation.

Avantageusement, le support de couple 21 comprend une première partie 21a et une deuxième partie 21b.

Avantageusement, la première partie 21a du support de couple 21 est configurée pour coopérer, autrement dit coopère, avec le carter 17 de l'actionneur électromécanique 11, en particulier dans la configuration assemblée de l'actionneur électromécanique 11. En outre, la deuxième partie 21b du support de couple 21 est configurée pour coopérer, autrement dit coopère, avec le dispositif de maintien 9, 23, en particulier dans une configuration assemblée de l'actionneur électromécanique 11 dans le dispositif d'occultation 3.

Avantageusement, la réalisation du support de couple 21 comprenant les première et deuxième parties 21a, 21b en une seule pièce permet d'améliorer la rigidité du support de couple 21.

Avantageusement, au moins une portion de la première partie 21a du support de couple 21 est de forme générale cylindrique et est disposée à l'intérieur du carter 17 de l'actionneur électromécanique 11, en particulier dans la configuration assemblée de l'actionneur électromécanique 11.

Avantageusement, un diamètre extérieur d'au moins une portion de la deuxième partie 21b du support de couple 21 est supérieur à un diamètre extérieur du carter 17 de l'actionneur électromécanique 11.

Avantageusement, le support de couple 21 comprend, en outre, une butée 33. En outre, la butée 33 est en appui, autrement dit est configurée pour être en appui, avec le carter 17, au niveau de la première extrémité 17a du carter 17, en particulier dans la configuration assemblée de l'actionneur électromécanique 11.

Ainsi, la butée 33 du support de couple 21 permet de limiter l'enfoncement de la première partie 21a du support de couple 21 dans le carter 17, suivant la direction de l'axe de rotation X.

En outre, la butée 33 du support de couple 21 délimite les première et deuxième parties 21a, 21b du support de couple 21 l'une par rapport à l'autre.

Ainsi, seule la première partie 21a du support de couple 21 est disposée à l'intérieur du carter 17 de l'actionneur électromécanique 11, suite à l'emmanchement du support de couple 21 à l'intérieur du carter 17, jusqu'à la butée 33, en particulier dans la configuration assemblée de l'actionneur électromécanique 11.

Ici, la butée 33 du support de couple 21 comprend un épaulement et, plus particulièrement, elle est réalisée sous la forme d'une collerette, en particulier de forme cylindrique et à génératrice rectiligne.

Ici et comme illustré aux figures 4 à 6, la couronne 53 est insérée autour du support de couple 21, en particulier de la deuxième partie 21b du support de couple 21, en particulier dans la configuration assemblée de l'actionneur électromécanique 11.

En variante, non représentée, la couronne 53 est insérée, d'une part, autour du support de couple 21, en particulier de la deuxième partie 21b du support de couple 21, et, d'autre part, autour du carter 17 de l'actionneur électromécanique 11, en particulier de la première extrémité 17a du carter 17, en particulier dans la configuration assemblée de l'actionneur électromécanique 11.

Ici, la couronne 53 est solidaire de l'actionneur électromécanique 11 et, plus particulièrement, du support de couple 21.

Ici et comme illustré aux figures 4 à 6, la couronne 53 est libre en rotation autour du support de couple 21, en particulier de la deuxième partie 21b du support de couple 21.

En variante, non représentée, la couronne 53 est libre en rotation, d'une part, autour du support de couple 21, en particulier de la deuxième partie 21b du support de couple 21, et, d'autre part, autour du carter 17 de l'actionneur électromécanique 11, en particulier de la première extrémité 17a du carter 17.

Ici, l'unité électronique de contrôle 15, en particulier les première et deuxième cartes électroniques 15a, 15, sont alimentées en énergie électrique au moyen du câble d'alimentation électrique 18.

Avantageusement, l'unité électronique de contrôle 15 est disposée au moins en partie à l'intérieur du carter 17 de l'actionneur électromécanique 11.

Par ailleurs, l'unité électronique de contrôle 15 peut être disposée au moins en partie à l'extérieur du carter 17 de l'actionneur électromécanique 11 et, en particulier, montée dans le support de couple 21.

Ici, la première carte électronique 15a de l'unité électronique de contrôle 15 est disposée à l'intérieur du carter 17 de l'actionneur électromécanique 11, en particulier dans la configuration assemblée de l'actionneur électromécanique 11. En outre, la deuxième carte électronique 15b est disposée à l'intérieur du support de couple 21 de l'actionneur électromécanique 11, en particulier dans la configuration assemblée de l'actionneur électromécanique 11.

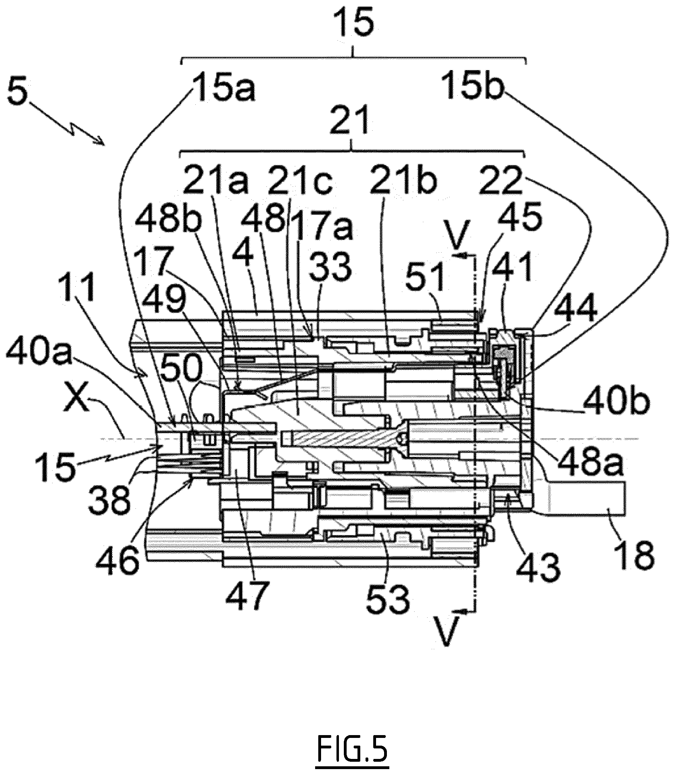

Ici, l'unité électronique de contrôle 15 est dépourvu d'un boîtier de réception de la première carte électronique 15a. Cette première carte électronique 15a est, d'une part, maintenue, notamment enfichée, dans le support de couple 21, en particulier dans une troisième partie centrale 21c du support de couple 21, comme illustré aux figures 4 et 5, et, d'autre part, maintenue, notamment enfichée, dans un support, non représenté, monté en extrémité du moteur électrique 16, en particulier dans la configuration assemblée de l'actionneur électromécanique 11.

Ici et comme illustré aux figures 3 à 5, le support de couple 21 comprend, en outre, un couvercle 22. Le couvercle 22 est monté sur la deuxième partie 21b du support de couple 21, en particulier dans la configuration assemblée de l'actionneur électromécanique 11.

Avantageusement, la deuxième carte électronique 15b est disposée à l'intérieur d'un évidement 43 formé entre la deuxième partie 21b du support de couple 21 et le couvercle 22.

Le support de couple 21 comprend au moins un dispositif de sélection 41, en particulier un bouton, pouvant être, par exemple, de type poussoir.

Ce ou ces dispositifs de sélection 41 sont configurés pour réaliser un réglage de l'actionneur électromécanique 11 au travers d'un ou plusieurs modes de configuration, appairer avec l'actionneur électromécanique 11 une ou plusieurs unités de commande 12, 13, réinitialiser un ou plusieurs paramètres, pouvant être, par exemple, une position de fin de course, réinitialiser la ou les unités de commande 12, 13 appairées ou encore commander le déplacement de l'écran 2.

Ici, le support de couple 21 comprend un seul dispositif de sélection 41.

Le nombre de dispositifs de sélection du support de couple n'est pas limitatif et peut être différent. Il peut être, notamment, supérieur ou égal à deux.

Le support de couple 21 comprend au moins un dispositif d'affichage, non représenté.

Ce ou ces dispositifs d'affichage sont configurés pour afficher une indication visuelle, pouvant être, par exemple, représentative d'un mode de fonctionnement de l'actionneur électromécanique 11, en particulier un mode de configuration ou un mode de commande, ou encore d'un état d'un organe du dispositif d'entraînement motorisé 5 ou du dispositif d'alimentation en énergie électrique 31, notamment un état de charge de la batterie 24.

Avantageusement, le dispositif d'affichage comprend au moins une source d'éclairage, non représentée, en particulier une diode électroluminescente, montée sur la deuxième carte électronique 15b et, éventuellement, un capot transparent ou translucide et/ou un guide de lumière, pour permettre le passage de la lumière émise par la source d'éclairage.

Ici, le support de couple 21 comprend un seul dispositif d'affichage.

Le nombre de dispositifs d'affichage n'est pas limitatif et peut être différent. Il peut être, notamment, supérieur ou égal à deux.

Avantageusement, le dispositif de sélection 41 et le dispositif d'affichage sont reliés électriquement, autrement dit sont configurés pour être reliés électriquement, à l'unité électronique de contrôle 15.

Ici, le dispositif de sélection 41 et le dispositif d'affichage sont reliés électriquement, autrement dit sont configurés pour être reliés électriquement, à la deuxième carte électronique de contrôle 15b.

En variante, le dispositif de sélection 41 et/ou le dispositif d'affichage peuvent être reliés électriquement, autrement dit peuvent être configurés pour être reliés électriquement, à la première carte électronique de contrôle 15a.

Le support de couple 21 peut comprendre soit le ou les dispositifs de sélection 41 soit le ou les dispositifs d'affichage, soit le ou les dispositifs de sélection 41 et le ou les dispositifs d'affichage.

Le support de couple 21 comprend au moins un logement 44. En outre, le logement 44 reçoit, autrement dit est configuré pour loger ou recevoir, au moins le ou les dispositifs de sélection 41 ou le ou les dispositifs d'affichage, en particulier dans la configuration assemblée de l'actionneur électromécanique 11.

De cette manière, le logement 44 reçoit, autrement dit est configuré pour recevoir, au moins un matériel parmi le ou les dispositifs de sélection 41 et le ou les dispositifs d'affichage, en particulier dans la configuration assemblée de l'actionneur électromécanique 11.

Ici, le support de couple 21 comprend un seul logement 44, où sont logés le dispositif de sélection 41 et le dispositif d'affichage.

En variante, non représentée, le support de couple 21 peut comprendre un premier logement 44 pour le dispositif de sélection 41 et un deuxième logement 44 pour le dispositif d'affichage. Le support de couple 21 peut comprendre, en outre, un premier logement 44 par dispositif de sélection 41 ou pour une pluralité de dispositifs de sélection 41, dans le cas où le support de couple 21 présente plusieurs dispositifs de sélection 41, et un deuxième logement 44 par dispositif d'affichage ou pour une pluralité de dispositifs d'affichage, dans le cas où le support de couple 21 présente plusieurs dispositifs d'affichage.

Avantageusement, l'arbre de sortie 20 de l'actionneur électromécanique 11 est disposé à l'intérieur du tube d'enroulement 4 et au moins en partie à l'extérieur du carter 17 de l'actionneur électromécanique 11.

Ici, une extrémité de l'arbre de sortie 20 est en saillie par rapport au carter 17 de l'actionneur électromécanique 11, en particulier par rapport à une deuxième extrémité 17b du carter 17 opposée à la première extrémité 17a.

Avantageusement, l'arbre de sortie 20 de l'actionneur électromécanique 11 est configuré pour entraîner en rotation un élément de liaison, non représenté, relié au tube d'enroulement 4. L'élément de liaison est réalisé sous la forme d'une roue.

Lors de la mise en fonctionnement de l'actionneur électromécanique 11, le moteur électrique 16 et le réducteur 19 entraînent en rotation l'arbre de sortie 20. En outre, l'arbre de sortie 20 entraîne en rotation le tube d'enroulement 4 par l'intermédiaire de l'élément de liaison.

Ainsi, le tube d'enroulement 4 entraîne en rotation l'écran 2 du dispositif d'occultation 3, de sorte à ouvrir ou fermer l'ouverture 1.

L'unité électronique de contrôle 15 de l'actionneur électromécanique 11 comprend un dispositif de détection d'obstacle et de fins de course, non représenté, lors de l'enroulement de l'écran 2 et lors du déroulement de cet écran 2.

Le dispositif de détection d'obstacle et de fins de course lors de l'enroulement et lors du déroulement de l'écran 2 est mis en oeuvre au moyen du microcontrôleur 30 de l'unité électronique de contrôle 15 et, en particulier, au moyen d'un algorithme mis en oeuvre par ce microcontrôleur 30.

L'actionneur électromécanique 11 comprend, en outre, un dispositif de décharge de charges électrostatiques 45.

Le dispositif de décharge de charges électrostatiques 45 comprenant au moins un élément de conduction électrique 51. Le ou chaque élément de conduction électrique 51 est configuré pour être en contact électrique, autrement dit est en contact électrique, avec le tube d'enroulement 4, en particulier dans la configuration assemblée du dispositif d'entraînement motorisé 5 et, par conséquent, du dispositif d'occultation 3.

Ici, le dispositif de décharge électrostatiques 45 comprenant un seul élément de conduction électrique 51.

Le nombre d'éléments de conduction électrique n'est pas limitatif et peut être différent. Il peut être, notamment, supérieur ou égal à deux.

On décrit maintenant, en référence aux figures 4 à 8, l'intégration du dispositif de décharge de charges électrostatiques 45 au niveau de l'actionneur électromécanique 11.

La couronne 53 porte l'élément de conduction électrique 51 du dispositif de décharge de charges électrostatiques 45.

Le câble d'alimentation électrique 18 comprend au moins un blindage 46.

Avantageusement, les deuxièmes conducteurs électriques 38 sont disposés à l'intérieur du blindage 46 du câble d'alimentation électrique 18.

Avantageusement, le câble d'alimentation électrique 18 comprend, en outre, une gaine isolante 47. En outre, le blindage 46 est ménagé entre la gaine isolante 47 et les deuxièmes conducteurs électriques 38.

En pratique, le câble d'alimentation électrique 18 peut comprendre au moins les deuxièmes conducteurs électriques 38, un matériau diélectrique, non représenté, autrement dit un matériau isolant, le blindage 46 et la gaine isolante 47. Les deuxièmes conducteurs électriques 38 sont entourés par le matériau diélectrique. Le matériau diélectrique est entouré par le blindage 46. En outre, le blindage 46 est entouré par la gaine isolante 47. Le blindage 46 peut être réalisé par une tresse conductrice, pouvant être, par exemple, en cuivre.

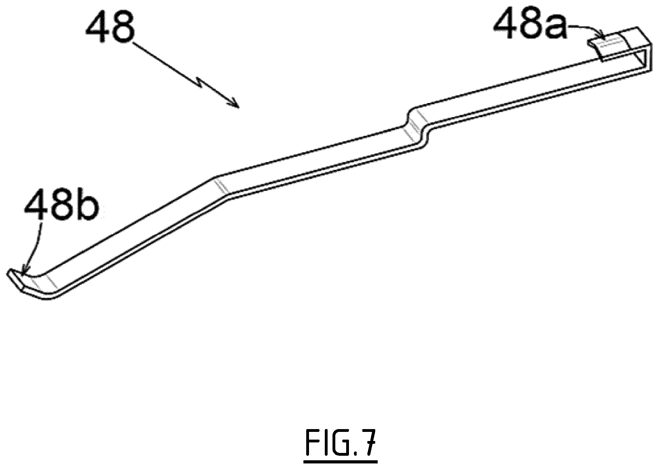

Le dispositif de décharge de charges électrostatiques 45 comprend, en outre, au moins un élément de liaison électrique 48, représenté seul à la figure 7.

Le support de couple 21 reçoit, en particulier dans son volume intérieur, au moins en partie l'élément de liaison électrique 48. Autrement dit, l'élément de liaison électrique 48 est monté au moins en partie à l'intérieur du support de couple 21, en particulier dans la configuration assemblée de l'actionneur électromécanique 11.

Ici, l'élément de liaison électrique 48 est disposé, d'une part, à l'intérieur du support de couple 21 et, d'autre part, à l'intérieur du carter 17, en particulier dans la configuration assemblée de l'actionneur électromécanique 11.

L'élément de conduction électrique 51, disposé au niveau de la couronne 53, est configuré pour être en contact électrique, autrement dit est en contact électrique, avec l'élément de liaison électrique 48, disposé au moins en partie au niveau du support de couple 21, en particulier dans la configuration assemblée de l'actionneur électromécanique 11.

L'élément de liaison électrique 48 relie électriquement, autrement dit est configuré pour relier électriquement, l'élément de conduction électrique 51 au blindage 46 du câble d'alimentation électrique 18.

Ici, le dispositif de décharge de charges électrostatiques 45 comprend un seul élément de liaison électrique 48.

Le nombre d'éléments de liaison électrique n'est pas limitatif et peut être différent. Il peut être, notamment, supérieur ou égal à deux.

Ainsi, l'évacuation de charges électrostatiques au travers du dispositif de décharge de charges électrostatiques 45 permet de créer un chemin préférentiel de décharge à partir du tube d'enroulement 4, vers l'élément de conduction électrique 51, disposé au niveau de la couronne 53, vers l'élément de liaison électrique 48, disposé au moins en partie au niveau du support de couple 21, puis vers le blindage 46 du câble d'alimentation électrique 18.

De cette manière, l'évacuation de charges électrostatiques au travers de l'élément de conduction électrique 51, disposé au niveau de la couronne 53, et de l'élément de liaison électrique 48, disposé à l'intérieur de l'actionneur électromécanique 11, en particulier du support de couple 21 et, éventuellement, du carter 17, permet d'éviter des dysfonctionnements et/ou des endommagements de l'actionneur électromécanique 11 et, éventuellement, du dispositif d'alimentation en énergie électrique 31 et, en particulier, d'empêcher la destruction de composants électroniques 56 montés sur la ou les plaques de circuit imprimé 40a, 40b, en particulier de l'une ou l'autre des première et deuxième cartes électroniques 15a, 15b de l'unité électronique de contrôle 15.

Par conséquent, l'élément de conduction électrique 51 et l'élément de liaison électrique 48 permettent d'évacuer des charges électrostatiques accumulées dans l'écran 2 du dispositif d'occultation 3 de l'installation 6.

De cette manière, l'élément de conduction électrique 51 et l'élément de liaison électrique 48 permettent de protéger l'unité électronique de contrôle 15 de l'actionneur électromécanique 11, en particulier les première et deuxième cartes électroniques 15a, 15b.

En outre, l'élément de conduction électrique 51 et l'élément de liaison électrique 48 permettent de limiter les surtensions au niveau des composants électroniques 56 montés sur la ou les plaques de circuit imprimé 40a, 40b, en particulier de l'une ou l'autre des première et deuxième cartes électroniques 15a, 15b de l'unité électronique de contrôle 15, de sorte à protéger l'unité électronique de contrôle 15.

Par ailleurs, l'évacuation de charges électrostatiques au travers du dispositif de décharge de charges électrostatiques 45 est mise en oeuvre de manière continue.

De cette manière, l'actionneur électromécanique 11 ne subit pas une décharge de charges électrostatiques via un arc électrique, suite à une accumulation de charges électrostatiques due, notamment, au frottement de l'écran 2 sur un ou plusieurs éléments d'assemblage du dispositif de d'occultation 3, tels que ceux du dispositif de maintien 9, 23.

Un tel dispositif de décharge de charges électrostatiques 45 réalisé au moyen de l'élément de liaison électrique 48 reliant électriquement l'élément de conduction électrique 51 au blindage 46 du câble d'alimentation électrique 18 est peu onéreux, simple à industrialiser et permet de minimiser les coûts d'obtention de l'actionneur électromécanique 11.

Pour permettre la décharge des charges électrostatiques, l'élément de conduction électrique 51 et l'élément de liaison électrique 48 sont réalisés dans une matière métallique, conductrice d'un point de vue électrique, pouvant être, par exemple, du cuivre, du laiton ou encore de l'acier.

Par ailleurs, une face externe du carter 17 de l'actionneur électromécanique 11 peut être recouverte d'une peinture, tel que cela est réalisé généralement, puisque la décharge des charges électrostatiques est mise en oeuvre par une conduction électrique entre le tube d'enroulement 4 et l'élément de conduction électrique 51 puis entre l'élément de conduction électrique 51 et l'élément de liaison électrique 48.

Avantageusement, l'élément de conduction électrique 51 est mobile en rotation par rapport à l'élément de liaison électrique 48.

Ici, l'élément de conduction électrique 51 est configuré pour être en contact électrique, autrement dit est en contact électrique, avec le tube d'enroulement 4, en particulier une face interne 4a de celui-ci.

Avantageusement, l'élément de conduction électrique 51 est en contact électrique permanent avec l'élément de liaison électrique 48 lors de l'entraînement en rotation de la couronne 53 autour du support de couple 21, en particulier lors de l'activation électrique de l'actionneur électromécanique 11.

Avantageusement, l'élément de conduction électrique 51 comprend un corps 63 et au moins une languette de contact 62. En outre, la ou chaque languette de contact 62 est reliée au corps 63.

Ici, le corps 63 de l'élément de conduction électrique 51 est en une seule partie et est de forme annulaire.

Ici, l'élément de conduction électrique 51 comprend quatre languettes de contact 62.

Ici, les languettes de contact 62 sont monoblocs avec le corps 63.

Le nombre de languettes de contact n'est pas limitatif et peut être différent. Il peut être, notamment de un, de deux, de trois ou supérieur ou égal à cinq.

Ici, la ou chaque languette de contact 62 de l'élément de conduction électrique 51 est configurée pour être en contact électrique, autrement dit est en contact électrique, avec le tube d'enroulement 4, en particulier une face interne 4a de celui-ci. En outre, le corps 63 de l'élément de conduction électrique 51, en particulier une face interne 63a de celui-ci, est configurée pour être en contact électrique, autrement dit est en contact électrique, avec l'élément de liaison électrique 48.

Avantageusement, la couronne 53 comprend au moins une ouverture 64. En outre, la ou chaque languette de contact 62 de l'élément de conduction électrique 51 traverse la ou l'une des ouvertures 64 de la couronne 53, en particulier dans la configuration de l'actionneur électromécanique 11.

Ici, la couronne 53 comprend quatre ouvertures 64.

Avantageusement, la couronne 53 comprend un nombre d'ouvertures 64 égal au nombre de languettes de contact 62 de l'élément de conduction électrique 51.

Avantageusement, l'élément de conduction électrique 51, en particulier le corps 63 de celui-ci, est surmoulé dans la couronne 53 et ainsi fait partie intégrante de la couronne 53. En ce sens, la couronne 53 comprend l'élément de conduction électrique 51.

En variante, l'élément de conduction électrique 51 est une pièce assemblée avec la couronne 53, autrement dit une pièce distincte de la couronne 53 configurée pour être assemblée avec la couronne 53.

Dans tous les cas, la couronne 53 porte l'élément de conduction électrique 51.

Avantageusement, la couronne 53 est réalisée dans une matière plastique.

Ainsi, lors de l'entraînement en rotation du tube d'enroulement 4 par l'activation électrique de l'actionneur électromécanique 11, le frottement de la couronne 53 sur la face interne 4a du tube d'enroulement 4 n'engendre pas de bruit de fonctionnement additionnel ou de saccades lors du déroulement ou lors de l'enroulement de l'écran 2, par rapport à un actionneur électromécanique 11 dépourvu du dispositif de décharge de charges électrostatiques 45.

Avantageusement, l'élément de liaison électrique 48 est réalisé sous la forme d'une première lame, notamment métallique.

Avantageusement, la première lame formant l'élément de liaison électrique 48 est configurée pour être en contact électrique, autrement dit est en contact électrique, avec la face interne 63a du corps 63 de l'élément de conduction électrique 51, en particulier dans la configuration assemblée de l'actionneur électromécanique 11.

Avantageusement, l'élément de conduction électrique 51 est configuré pour être en contact électrique, autrement dit est en contact électrique, avec l'élément de liaison électrique 48 par frottement ou par glissement de l'élément de conduction électrique 51, en particulier du corps 63 de celui-ci, sur l'élément de liaison électrique 48, en particulier de la première lame formant celui-ci.

Avantageusement, l'unité électronique de contrôle 15 comprend, en outre, un premier élément de connexion électrique 49, en particulier une deuxième lame, par exemple métallique, et un deuxième élément de connexion électrique 50. Le premier élément de connexion électrique 49 est monté sur la plaque de circuit imprimé 40a de la première carte électronique 15a, en particulier dans une configuration assemblée de l'unité électronique de contrôle 15. L'élément de liaison électrique 48 est relié électriquement au premier élément de connexion électrique 49, notamment mis en contact électrique avec le premier élément de connexion électrique 49, en particulier dans la configuration assemblée de l'actionneur électromécanique 11. Le deuxième élément de connexion électrique 50 est relié électriquement au premier élément de connexion électrique 49, notamment connecté électriquement avec le premier élément de connexion électrique 49, en particulier dans la configuration assemblée de l'actionneur électromécanique 11. En outre, le deuxième élément de connexion électrique 50 est relié électriquement au blindage 46 du câble d'alimentation électrique 18, en particulier dans la configuration assemblée de l'actionneur électromécanique 11.

Avantageusement, l'élément de liaison électrique 48 s'étend à partir de l'élément de conduction électrique 51 jusqu'au premier élément de connexion électrique 49 de l'unité électronique de contrôle 15, en particulier dans la configuration assemblée de l'actionneur électromécanique 11.

Ici et comme illustré aux figures 4 et 5, l'élément de liaison électrique 48 s'étend à l'intérieur des premières et deuxièmes parties 21a, 21b du support de couple 21 et, par conséquent, partiellement à l'intérieur du carter 17.

Avantageusement, l'élément de liaison électrique 48 comprend au moins une première extrémité 48a et une deuxième extrémité 48b, la deuxième extrémité 48 étant opposée à la première extrémité 48a. La première extrémité 48a de l'élément de liaison électrique 48 est positionnée en vis-à-vis de l'élément de conduction électrique 51, en particulier du corps 63 de l'élément de conduction électrique 51 et, plus particulièrement, en contact électrique avec ce dernier. En outre, la deuxième extrémité 48b de l'élément de liaison électrique 48 est disposée au niveau du premier élément de connexion électrique 49 de l'unité électronique de contrôle 15, en particulier en contact électrique avec le premier élément de connexion électrique 49, en l'occurrence de la première carte électronique 15a.

Ici, la décharge des charges électrostatiques est mise en oeuvre par la circulation d'un courant électrique à partir de l'écran 2 puis en passant par le tube d'enroulement 4, dans l'élément de conduction électrique 51, dans l'élément de liaison électrique 48, disposé à l'intérieur de l'actionneur électromécanique 11, dans les premier et deuxième éléments de connexion électrique 49, 50 de l'unité électronique de contrôle 15 et dans le blindage 46 du câble d'alimentation électrique 18.

Avantageusement, le blindage 46 du câble d'alimentation électrique 18 est, en outre, configuré pour être connecté électriquement, autrement dit est connecté électriquement, à une terre, en particulier une terre de l'installation 6, dans un état monté de l'actionneur électromécanique 11 dans l'installation 6.

Ici, le carter 17 de l'actionneur électromécanique 11 n'est pas relié électriquement à la terre.

Ainsi, l'actionneur électromécanique 11 peut être relié électriquement au réseau d'alimentation en énergie électrique 52 sans nécessiter un conducteur électrique de terre, tant au niveau de l'actionneur électromécanique 11 que du réseau d'alimentation en énergie électrique 52, lors de l'installation de l'actionneur électromécanique 11, de sorte à simplifier l'installation de l'actionneur électromécanique 11 et à réduire les coûts d'obtention de l'actionneur électromécanique 11.

Avantageusement, l'élément de liaison électrique 48 est mis en contact électrique, autrement dit est configuré pour être mis en contact électrique, avec le premier élément de connexion électrique 49 de l'unité électronique de contrôle 15, en particulier de la première carte électronique 15a, lors de l'assemblage du support de couple 21 sur le carter 17.

Ici, un tel assemblage du support de couple 21 sur le carter 17 peut être mis en oeuvre par l'intermédiaire de moyens automatisés lors de la fabrication de l'actionneur électromécanique 11.

Ici, la couronne 53 est bloquée à translation par rapport au support de couple 21, suivant la direction de l'axe de rotation X.

Ainsi, la couronne 53 ne peut pas être entraînée en déplacement suivant l'axe de rotation X et glissée le long du carter 17 de l'actionneur électromécanique 11.

De cette manière, la couronne 53 est entraînée uniquement en rotation par le tube d'enroulement 4, en particulier lors de l'activation électrique de l'actionneur électromécanique 11.

Avantageusement, la couronne 53 est configurée pour être solidaire, autrement dit est solidaire, du tube d'enroulement 4, lors de l'entraînement en rotation du tube d'enroulement 4 autour du carter 17 de l'actionneur électromécanique 11, en particulier lors de l'activation électrique de l'actionneur électromécanique 11.

Ici, le tube d'enroulement 4 comprend des nervures 61. Les nervures 61 sont ménagées sur la face interne 4a du tube d'enroulement 4 et orientées vers l'axe de rotation X. La ou chaque languette de contact 62 de l'élément conducteur électrique 51 est positionnée entre deux nervures 61 du tube d'enroulement 4, en particulier dans la configuration assemblée du dispositif d'entraînement motorisé 5.

Ainsi, lors de l'entraînement en rotation du tube d'enroulement 4 autour du carter 17 de l'actionneur électromécanique 11, la ou au moins l'une des languettes de contact 62 de l'élément conducteur électrique 51 est mise en appui contre l'une des nervures 61 du tube d'enroulement 4.

De cette manière, la couronne 53 est entraînée en rotation par le tube d'enroulement 4, autour du support de couple 21 et, éventuellement, du carter 17 de l'actionneur électromécanique 11.

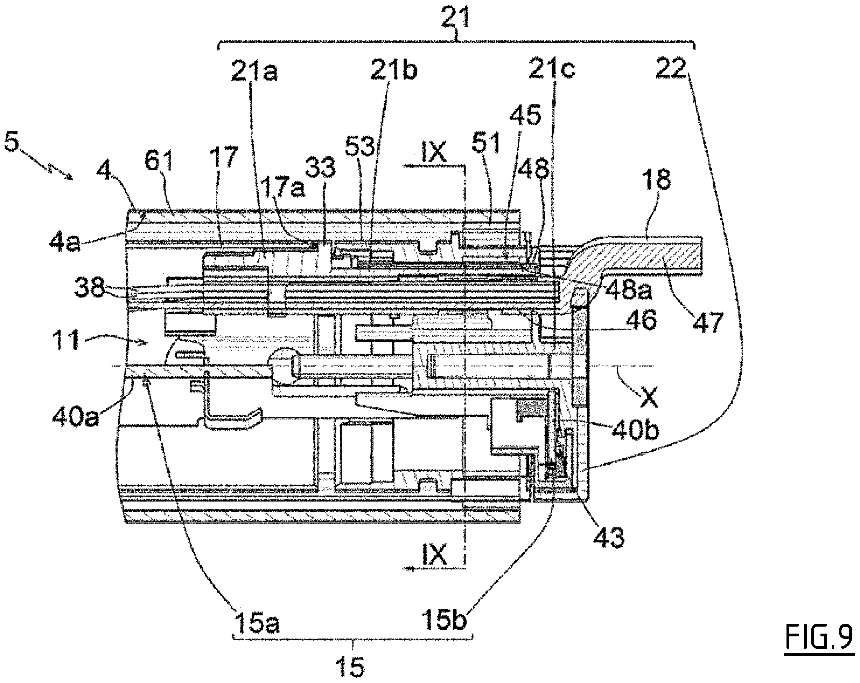

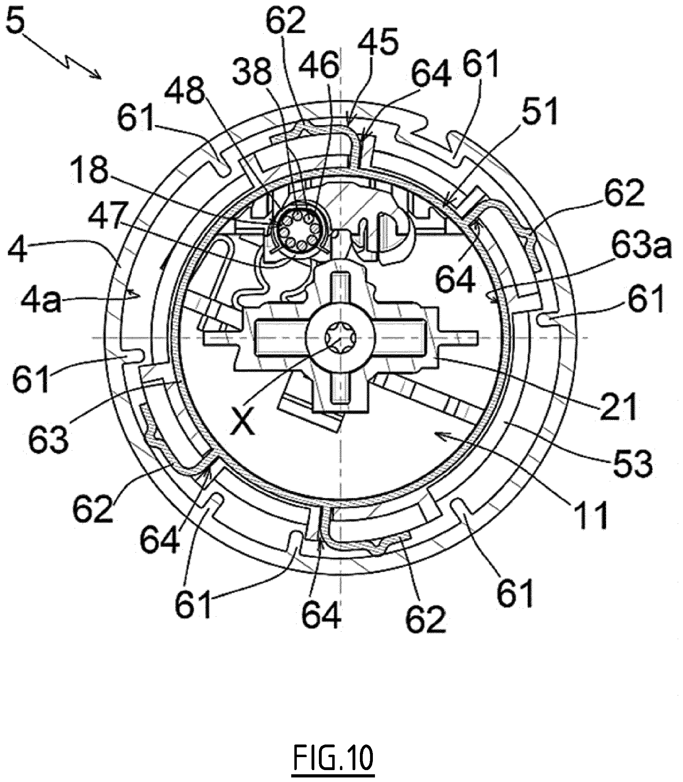

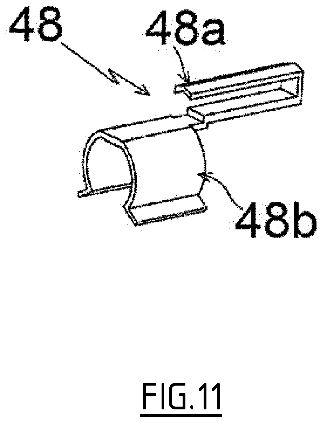

Dans le deuxième mode de réalisation, représenté aux figures 9 à 11, les éléments analogues à ceux du premier mode de réalisation portent les mêmes références et fonctionnent comme expliqué ci-dessus. Dans ce qui suit, on décrit, principalement, que ce qui distingue ce deuxième mode de réalisation du précédent. Dans ce qui suit, lorsqu'un signe de référence est utilisé dans la description sans être reproduit sur les figures 9 à 11 ou reproduit sur les figures 9 à 11 sans être mentionné dans la description, il correspond à l'objet portant la même référence sur l'une des figures 1 à 8.

On décrit maintenant, en référence aux figures 9 à 11, l'actionneur électromécanique 11 selon le deuxième mode de réalisation de l'invention et, plus particulièrement, le dispositif de décharge des charges électrostatiques 45 de cet actionneur électromécanique 11.

Ici, l'élément de liaison électrique 48 est réalisé sous la forme d'un cavalier, de préférence monobloc. L'élément de liaison électrique 48 comprend une première extrémité 48a en forme d'épingle, configurée pour être en contact avec la face interne 63a du corps 63 de l'élément de conduction électrique 51, en particulier dans la configuration assemblée du dispositif d'entraînement motorisé 5. L'élément de liaison électrique 48 comprend, en outre, une deuxième extrémité 48b en forme de clip, configurée pour entourer le blindage 46, en particulier dans la configuration assemblée du dispositif d'entraînement motorisé 5.

Ici, l'élément de liaison électrique 48 est relié directement au blindage 46 du câble d'alimentation électrique 18, c'est-à-dire sans être relié électriquement à l'unité électronique de contrôle 15.

Dans ce cas, la décharge des charges électrostatiques est mise en oeuvre par la circulation d'un courant électrique à partir de l'écran 2 puis en passant par le tube d'enroulement 4, dans l'élément de conduction électrique 51, disposé au niveau de la couronne 53, dans l'élément de liaison électrique 48 et dans le blindage 46 du câble d'alimentation électrique 18, sans traverser des éléments montés sur la première carte électronique 15a, en particulier la première plaque de circuit imprimé 40a.

Grâce à la présente invention, quel que soit le mode de réalisation, l'évacuation de charges électrostatiques au travers du dispositif de décharge de charges électrostatiques permet de créer un chemin préférentiel de décharge à partir du tube d'enroulement, vers l'élément de conduction électrique, disposé au niveau de la couronne, vers l'élément de liaison électrique, disposé au moins en partie au niveau du support de couple, puis vers le blindage du câble d'alimentation électrique.

De cette manière, l'évacuation de charges électrostatiques au travers de l'élément de conduction électrique, disposé au niveau de la couronne, et de l'élément de liaison électrique, disposé à l'intérieur de l'actionneur électromécanique, en particulier du support de couple et, éventuellement, du carter, permet d'éviter des dysfonctionnements et/ou des endommagements de l'actionneur électromécanique et, en particulier, d'empêcher la destruction de composants électroniques montés sur une ou plusieurs plaques de circuit imprimé d'une unité électronique de contrôle.

De nombreuses modifications peuvent être apportées aux exemples de réalisation décrits précédemment, sans sortir du cadre de l'invention défini par les revendications.

En variante, le câble d'alimentation électrique 18 comprend au moins un conducteur électrique de terre. Dans ce cas, le conducteur électrique de terre remplace le blindage 46 du câble d'alimentation électrique 18. Dans ce cas également, le conducteur électrique de terre est l'un des deuxièmes conducteurs électriques 38 du câble d'alimentation électrique 18. Par conséquent, le câble d'alimentation électrique 18 peut être dépourvu du blindage 46.

En variante, non représentée, l'élément de conduction électrique 51, disposé au niveau de la couronne 53, est en contact électrique périodiquement avec l'élément de liaison électrique 48, disposé au moins en partie au niveau du support de couple 21, lors de l'entraînement en rotation de la couronne 53 autour du support de couple 21, en particulier lors de l'activation électrique de l'actionneur électromécanique 11. Dans ce cas, le corps 63 de l'élément de conduction électrique 51 peut être réalisé en plusieurs parties, pouvant être, par exemple, des sections d'anneau.

En variante, non représentée, l'élément de conduction électrique 51 comprend un ou plusieurs balais. Dans ce cas, le ou les balais remplacent la ou les languettes de contact 62 de l'élément de conduction électrique 51. Avantageusement, le ou chaque balai comprend une pluralité de fils métalliques, pouvant être, par exemple, en cuivre, en laiton ou en acier.

En variante, non représentée, l'unité électronique de contrôle 15 comprend, en outre, un boîtier. En outre, la première carte électronique 15a est disposée à l'intérieur du boîtier, en particulier dans la configuration assemblée de l'unité électronique de contrôle 15. Ainsi, le boîtier de l'unité électronique de contrôle 15 permet de protéger la première carte électronique 15a, lors de l'assemblage de l'actionneur électromécanique 11 et suite à l'assemblage de ce dernier. De cette manière, le boîtier de l'unité électronique de contrôle 15 permet d'isoler électriquement la première carte électronique 15a par rapport au carter 17. Avantageusement, le diamètre extérieur du boîtier de l'unité électronique de contrôle 15 est inférieur au diamètre intérieur du carter 17, de sorte que le boîtier peut être inséré dans le carter 17, lors de l'assemblage de l'actionneur électromécanique 11. Dans un premier cas, le boîtier de l'unité électronique de contrôle 15 peut comprendre deux demi-coques configurées pour coopérer ensemble, en particulier dans la configuration assemblée de l'unité électronique de contrôle 15. Dans la configuration assemblée de l'actionneur électromécanique 11, les deux demi-coques sont assemblées entre elles, de sorte à définir un plan de jonction s'étendant suivant une direction parallèle à l'axe de rotation X. Avantageusement, au moins l'une des deux demi-coques formant le boîtier comprend des éléments de positionnement et de fixation de la première carte électronique 15a, notamment de la première plaque de circuit imprimé 40a, en particulier dans la configuration assemblée de l'unité électronique de contrôle 15. Dans un deuxième cas, le boîtier de l'unité électronique de contrôle 15 peut comprendre un ou plusieurs tronçons, le ou chaque tronçon étant réalisé sous la forme d'un tube creux. Le ou chaque tronçon est configuré pour loger ou recevoir, autrement dit loge ou reçoit, la première carte électronique 15a, en particulier dans la configuration assemblée de l'unité électronique de contrôle 15. Dans un tel cas, le ou chaque tronçon du boîtier comprend une première rainure et une deuxième rainure. En outre, les première et deuxième rainures sont configurées pour maintenir en position, autrement dit maintiennent en position, la première carte électronique 15a, notamment la première plaque de circuit imprimé 40a, à l'intérieur du boîtier, en particulier dans la configuration assemblée de l'unité électronique de contrôle 15.

En variante, la valeur de la tension du réseau d'alimentation en énergie électrique 52 peut être de l'ordre de 230 volts. En outre, le moteur électrique 16 peut être de type asynchrone.

En outre, les modes de réalisation et variantes envisagés peuvent être combinés pour générer de nouveaux modes de réalisation de l'invention, sans sortir du cadre de l'invention défini par les revendications.

## Revendications

1. Actionneur électromécanique (11) pour un dispositif d'occultation (3),
l'actionneur électromécanique (11) comprenant au moins :
- un carter (17),
- un support de couple (21), le support de couple (21) étant disposé au niveau d'une première extrémité (17a) du carter (17),
- une couronne (53), la couronne (53) étant insérée au moins en partie autour du support de couple (21), la couronne (53) formant un palier de guidage en rotation d'un tube d'enroulement (4) d'un dispositif d'entraînement motorisé (5) du dispositif d'occultation (3), autour du carter (17) de l'actionneur électromécanique (11),
- un câble d'alimentation électrique (18), le câble d'alimentation électrique (18) étant configuré pour être relié à un réseau d'alimentation en énergie électrique (52), le câble d'alimentation électrique (18) comprenant soit au moins un blindage (46) soit au moins un conducteur électrique de terre (38),
- un moteur électrique (16), le moteur électrique (16) étant monté à l'intérieur du carter (17), le moteur électrique (16) étant alimenté en énergie électrique par l'intermédiaire du câble d'alimentation électrique (18), et
- un dispositif de décharge de charges électrostatiques (45), le dispositif de décharge de charges électrostatiques (45) comprenant au moins un élément de conduction électrique (51), l'élément de conduction électrique (51) étant configuré pour être en contact électrique avec le tube d'enroulement (4),
**caractérisé**
**en ce que** la couronne (53) porte l'élément de conduction électrique (51) du dispositif de décharge de charges électrostatiques (45),
**en ce que** le dispositif de décharge de charges électrostatiques (45) comprend, en outre, au moins un élément de liaison électrique (48),
**en ce que** le support de couple (21) reçoit au moins en partie l'élément de liaison électrique (48),
**en ce que** l'élément de conduction électrique (51), disposé au niveau de la couronne (53), est configuré pour être en contact électrique avec l'élément de liaison électrique (48), disposé au moins en partie au niveau du support de couple (21),
et **en ce que** l'élément de liaison électrique (48) relie électriquement l'élément de conduction électrique (51) au blindage (46) du câble d'alimentation électrique (18) ou au conducteur électrique de terre (38) du câble d'alimentation électrique (18).

2. Actionneur électromécanique (11) pour un dispositif d'occultation (3) selon la revendication 1, **caractérisé en ce que** l'élément de conduction électrique (51), disposé au niveau de la couronne (53), est mobile en rotation par rapport à l'élément de liaison électrique (48), disposé au moins en partie au niveau du support de couple (21).

3. Actionneur électromécanique (11) pour un dispositif d'occultation (3) selon la revendication 2, **caractérisé en ce que** l'élément de conduction électrique (51), disposé au niveau de la couronne (53), est en contact électrique permanent avec l'élément de liaison électrique (48), disposé au moins en partie au niveau du support de couple (21), lors de l'entraînement en rotation de la couronne (53) autour du support de couple (21).

4. Actionneur électromécanique (11) pour un dispositif d'occultation (3) selon la revendication 2, **caractérisé en ce que** l'élément de conduction électrique (51), disposé au niveau de la couronne (53), est en contact électrique périodiquement avec l'élément de liaison électrique (48), disposé au moins en partie au niveau du support de couple (21), lors de l'entraînement en rotation de la couronne (53) autour du support de couple (21).

5. Actionneur électromécanique (11) pour un dispositif d'occultation (3) selon l'une quelconque des revendications 1 à 4, **caractérisé**
- **en ce que** l'actionneur électromécanique (11) comprend, en outre, une unité électronique de contrôle (15),
- **en ce que** l'unité électronique de contrôle (15) comprend au moins :
- une plaque de circuit imprimé (40a, 40b),
- un premier élément de connexion électrique (49), le premier élément de connexion électrique (49) étant monté sur la plaque de circuit imprimé (40a), et
- un deuxième élément de connexion électrique (50), le deuxième élément de connexion électrique (50) étant relié électriquement au premier élément de connexion électrique (49),
- **en ce que** l'élément de liaison électrique (48) est relié électriquement au premier élément de connexion électrique (49),
- et **en ce que** le deuxième élément de connexion électrique (50) est relié électriquement au blindage (46) du câble d'alimentation électrique (18) ou au conducteur électrique de terre (38) du câble d'alimentation électrique (18).

6. Actionneur électromécanique (11) pour un dispositif d'occultation (3) selon la revendication 5, **caractérisé en ce que** l'élément de liaison électrique (48) s'étend à partir de l'élément de conduction électrique (51), disposé au niveau de la couronne (53), jusqu'au premier élément de connexion électrique (49) de l'unité électronique de contrôle (15).

7. Actionneur électromécanique (11) pour un dispositif d'occultation (3) selon l'une quelconque des revendications 1 à 6, **caractérisé**
- **en ce que** l'élément de conduction électrique (51) comprend un corps (63) et au moins une languette de contact (62),
- et **en ce que** la ou chaque languette de contact (62) est reliée au corps (63).

8. Dispositif d'entraînement motorisé (5) pour un dispositif d'occultation (3), le dispositif d'entraînement motorisé (5) comprenant au moins :
- un actionneur électromécanique (11),
- un tube d'enroulement (4), le tube d'enroulement (4) étant agencé de sorte à être entraîné en rotation par l'actionneur électromécanique (11),
**caractérisé en ce que** l'actionneur électromécanique (11) est conforme à l'une quelconque des revendications 1 à 7.

9. Dispositif d'entraînement motorisé (5) pour un dispositif d'occultation (3) selon la revendication 8, **caractérisé en ce que** l'élément de conduction électrique (51), disposé au niveau de la couronne (53), est configuré pour être en contact électrique avec une face interne (4a) du tube d'enroulement (4).

10. Dispositif d'occultation (3) comprenant au moins :
- un écran (2), et
- un dispositif d'entraînement motorisé (5), l'écran (2) étant enroulable sur un tube d'enroulement (4) du dispositif d'entraînement motorisé (5),
**caractérisé en ce que** le dispositif d'entraînement motorisé (5) est conforme à la revendication 8 ou à la revendication 9.

## Patentansprüche

1. Elektromechanischer Aktuator (11) einer Verdunkelungsvorrichtung (3), der elektromechanische Aktuator (11) mindestens umfassend:
- ein Gehäuse (17),
- eine Drehmomentstütze (21), wobei die Drehmomentstütze (21) auf Ebene eines ersten Endes (17a) des Gehäuses (17) angeordnet ist,
- einen Kranz (53), wobei der Kranz (53) zumindest teilweise um die Drehmomentstütze (21) herum eingesetzt ist, wobei der Kranz (53) ein Lager zur Drehführung eines Wickelrohrs (4) einer motorisierten Antriebsvorrichtung (5) der Verdunkelungsvorrichtung (3) um das Gehäuse (17) des elektromechanischen Aktuators (11) herum bildet,
- ein Stromversorgungskabel (18), wobei das Stromversorgungskabel (18) konfiguriert ist, um mit einem Stromversorgungsnetz (52) verbunden zu werden, das Stromversorgungskabel (18) umfassend entweder mindestens eine Abschirmung (46) oder mindestens einen elektrischen Erdungsleiter (38),
- einen Elektromotor (16), wobei der Elektromotor (16) innerhalb des Gehäuses (17) montiert ist, wobei der Elektromotor (16) über das Stromversorgungskabel (18) mit elektrischer Energie versorgt wird, und
- eine Entladungsvorrichtung für elektrostatische Ladung (45), die Entladungsvorrichtung für elektrostatische Ladung (45) umfassend mindestens ein elektrisch leitendes Element (51), wobei das elektrisch leitende Element (51) konfiguriert ist, um in elektrischem Kontakt mit dem Wickelrohr (4) zu sein,
**dadurch gekennzeichnet,**
**dass** der Kranz (53) das elektrisch leitende Element (51) der Entladungsvorrichtung für elektrostatische Ladung (45) trägt,
**dass** die Entladungsvorrichtung für elektrostatische Ladung (45) ferner mindestens ein elektrisches Verbindungselement (48) umfasst,
**dass** die Drehmomentstütze (21) das elektrische Verbindungselement (48) zumindest teilweise aufnimmt,
**dass** das elektrisch leitende Element (51), das auf Ebene des Kranzes (53) angeordnet ist, konfiguriert ist, um in elektrischem Kontakt mit dem elektrischen Verbindungselement (48) zu sein, das zumindest teilweise auf Ebene der Drehmomentstütze (21) angeordnet ist,
und **dass** das elektrische Verbindungselement (48) das elektrisch leitende Element (51) elektrisch mit der Abschirmung (46) des Stromversorgungskabels (18) oder dem elektrischen Erdungsleiter (38) des Stromversorgungskabels (18) verbindet.

2. Elektromechanischer Aktuator (11) für eine Verdunkelungsvorrichtung (3) nach Anspruch 1, **dadurch gekennzeichnet, dass** das elektrisch leitende Element (51), das auf Ebene des Kranzes (53) angeordnet ist, in Bezug auf das elektrische Verbindungselement (48) drehbar ist, das zumindest teilweise auf Höhe der Drehmomentstütze (21) angeordnet ist.

3. Elektromechanischer Aktuator (11) für eine Verdunkelungsvorrichtung (3) nach Anspruch 2, **dadurch gekennzeichnet, dass** das an dem Kranz (53) angeordnete elektrisch leitende Element (51) beim Drehantrieb des Kranzes (53) um die Drehmomentstütze (21) in ständigem elektrischen Kontakt mit der zumindest teilweise an der Drehmomentstütze (21) angeordneten elektrischen Verbindungselement (48) ist.

4. Elektromechanischer Aktuator (11) für eine Verdunkelungsvorrichtung (3) nach Anspruch 2, **dadurch gekennzeichnet, dass** das an dem Kranz (53) angeordnete elektrisch leitende Element (51) beim Drehantrieb des Kranzes (53) um die Drehmomentstütze (21) periodisch in elektrischem Kontakt mit der zumindest teilweise an der Drehmomentstütze (21) angeordneten elektrischen Verbindungselement (48) ist.

5. Elektromechanischer Aktuator (11) für eine Verdunkelungsvorrichtung (3) nach einem der Ansprüche 1 bis 4, **dadurch gekennzeichnet,**
- **dass** der elektromechanische Aktuator (11) zusätzlich eine elektronische Steuereinheit (15) umfasst,
- die elektronische Steuereinheit (15) mindestens umfassend:
- eine Leiterplatte (40a, 40b),
- ein erstes elektrisches Verbindungselement (49), wobei das erste elektrische Verbindungselement (49) auf der Leiterplatte (40a) montiert ist, und
- ein zweites elektrisches Verbindungselement (50), wobei das zweite elektrische Verbindungselement (50) elektrisch mit dem ersten elektrischen Verbindungselement (49) verbunden ist,
- **dass** das elektrische Verbindungselement (48) elektrisch mit dem ersten elektrischen Verbindungselement (49) verbunden ist,
- und **dass** das zweite elektrische Verbindungselement (50) elektrisch mit der Abschirmung (46) des Stromversorgungskabels (18) oder dem elektrischen Erdungsleiter (38) des Stromversorgungskabels (18) verbunden ist.

6. Elektromechanischer Aktuator (11) für eine Verdunkelungsvorrichtung (3) nach Anspruch 5, **dadurch gekennzeichnet, dass** sich das elektrische Verbindungselement (48) von dem elektrisch leitenden Element (51), das auf Ebene des Kranzes (53) angeordnet ist, bis zu dem ersten elektrischen Verbindungselement (49) der elektronischen Steuereinheit (15) erstreckt.

7. Elektromechanischer Aktuator (11) für einen Elektromotor (3) nach einem der Ansprüche 1 bis 6, **dadurch gekennzeichnet,**
- **dass** das elektrisch leitende Element (51) einen Körper (63) und mindestens eine Kontaktzunge (62) umfasst,
- und dadurch, dass die oder jede Kontaktzunge (62) mit dem Körper (63) verbunden ist.

8. Motorisierte Antriebsvorrichtung (5) für eine Verdunkelungsvorrichtung (3), die motorisierte Antriebsvorrichtung (5) mindestens umfassend:
- einen elektromechanischen Aktuator (11),
- ein Wickelrohr (4), wobei das Wickelrohr (4) angeordnet ist, um durch den elektromechanischen Aktuator (11) in Drehung versetzt zu werden,
**dadurch gekennzeichnet, dass** der elektromechanische Aktuator (11) nach einem der Ansprüche 1 bis 7 ist.

9. Motorisierte Antriebsvorrichtung (5) für eine Verdunkelungsvorrichtung (3) nach Anspruch 8, **dadurch gekennzeichnet, dass** das elektrisch leitende Element (51), das auf Ebene des Kranzes (53) angeordnet ist, konfiguriert ist, um in elektrischem Kontakt mit einer Innenfläche (4a) des Wickelrohrs (4) zu sein.

10. Verdunkelungsvorrichtung (3), mindestens umfassend:
- einen Schirm (2), und
- eine motorisierte Antriebsvorrichtung (5), wobei der Schirm (2) auf ein Aufwickelrohr (4) der motorisierten Antriebsvorrichtung (5) aufwickelbar ist,
**dadurch gekennzeichnet, dass** die motorisierte Antriebsvorrichtung (5) gemäß Anspruch 8 oder Anspruch 9 ausgestaltet ist.

## Claims

1. An electromechanical actuator (11) for a shading device (3),
the electromechanical actuator (11) comprising at least:
- a casing (17),
- a torque support (21), the torque support (21) being arranged at a first end (17a) of the casing (17),
- a ring (53), the ring (53) being inserted at least partly around the torque support (21), the ring (53) forming a bearing guiding the rotation of a winding tube (4) of a motorized driving device (5) of the shading device (3), around the casing (17) of the electromechanical actuator (11),
- an electrical power supply cable (18), the electrical power supply cable (18) being configured to be connected to an electrical power supply network (52), the electrical power supply cable (18) comprising either at least one shielding (46) or at least one earth electrical conductor (38),
- an electric motor (16), the electric motor (16) being mounted within the casing (17), the electric motor (16) being supplied with electrical energy via the electrical power supply cable (18), and
- a device for discharging electrostatic charge (45), the device for discharging electrostatic charge (45) comprising at least one electrical conduction element (51), the electrical conduction element (51) being configured to be in electrical contact with the winding tube (4),
**characterized**
**in that** the ring (53) bears the electrical conduction element (51) of the device for discharging electrostatic charge (45),
**in that** the device for discharging electrostatic charge (45) further comprises at least one electrical linking element (48),
**in that** the torque support (21) at least partly accommodates the electrical linking element (48),
**in that** the electrical conduction element (51), arranged at the ring (53), is configured to be in electrical contact with the electrical linking element (48), arranged at least partly at the torque support (21),
and **in that** the electrical linking element (48) electrically connects the electrical conduction element (51) to the shielding (46) of the electrical power supply cable (18) or to the earth electrical conductor (38) of the electrical power supply cable (18).

2. The electromechanical actuator (11) for a shading device (3) according to claim 1, **characterized in that** the electrical conduction element (51), arranged at the ring (53), is rotatable relative to the electrical linking element (48), arranged at least partly at the torque support (21).

3. The electromechanical actuator (11) for a shading device (3) according to claim 2, **characterized in that** the electrical conduction element (51), arranged at the ring (53), is in permanent electrical contact with the electrical linking element (48), arranged at least partly at the torque support (21), when the ring (53) is rotated around the torque support (21).

4. The electromechanical actuator (11) for a shading device (3) according to claim 2, **characterized in that** the electrical conduction element (51), arranged at the ring (53), is periodically in electrical contact with the electrical linking element (48), arranged at least partly at the torque support (21), when the ring (53) is rotated around the torque support (21).

5. The electromechanical actuator (11) for a shading device (3) according to any one of claims 1 to 4, **characterized**
- **in that** the electromechanical actuator (11) further comprises an electronic control unit (15),
- **in that** the electronic control unit (15) comprises at least:
- a printed circuit board (40a, 40b),
- a first electrical connecting element (49), the first electrical connecting element (49) being mounted on the printed circuit board (40a), and
- a second electrical connecting element (50), the second electrical connecting element (50) being electrically connected to the first electrical connecting element (49),
- **in that** the electrical linking element (48) is electrically connected to the first electrical connecting element (49),
- and **in that** the second electrical connecting element (50) is electrically connected to the shielding (46) of the electrical power supply cable (18) or to the earth electrical conductor (38) of the electrical power supply cable (18).

6. The electromechanical actuator (11) for a shading device (3) according to claim 5, **characterized in that** the electrical linking element (48) extends from the electrical conduction element (51), arranged at the ring (53), to the first electrical connecting element (49) of the electronic control unit (15).

7. The electromechanical actuator (11) for a shading device (3) according to any one of claims 1 to 6, **characterized**
- **in that** the electrical conduction element (51) comprises a body (63) and at least one contact tab (62),
- and **in that** the or each contact tab (62) is connected to the body (63).

8. A motorized driving device (5) for a shading device (3), the motorized driving device (5) comprising at least:
- an electromechanical actuator (11),
- a winding tube (4), the winding tube (4) being arranged to be rotated by the electromechanical actuator (11),
**characterized in that** the electromechanical actuator (11) is according to any one of claims 1 to 7.

9. The motorized driving device (5) for a shading device (3) according to claim 8, **characterized in that** the electrical conduction element (51), arranged at the ring (53), is configured to be in electrical contact with an inner face (4a) of the winding tube (4).

10. A shading device (3) comprising at least:
- a screen (2), and
- a motorized driving device (5), the screen (2) being rollable on a winding tube (4) of the motorized driving device (5),
**characterized in that** the motorized driving device (5) is according to claim 8 or claim 9.
